# EUROPEAN PATENT APPLICATION

(11) **EP 4 383 617 A1**
(43) Date of publication of application: **12.06.2024**
(21) Application number: 22853576.1
(22) Date of filing: 08.08.2022
(51) Int. Cl.: H04L 1/18, H04L 1/08, H04W 72/12, H04W 72/23, H04W 76/28

(54) **METHOD, USER EQUIPMENT, PROCESSING DEVICE, STORAGE MEDIUM, AND COMPUTER PROGRAM FOR TRANSMITTING HARQ-ACK INFORMATION, AND METHOD AND BASE STATION FOR RECEIVING HARQ-ACK INFORMATION**

(30) Priority: 06.08.2021 KR 20210103942; 01.10.2021 KR 20210131168
(71) Applicant: LG Electronics Inc., Yeongdeungpo-gu Seoul 07336 (KR)
(72) Inventor: BAE, Duckhyun, Seoul 06772 (KR); YANG, Suckchel, Seoul 06772 (KR)
(74) Representative: Mooser, Sebastian Thomas
(86) International application number: PCT/KR2022/011748
(87) International publication number: WO 2023/014201

(57) **Abstract**

UE comprises: on the basis that transmission of first HARQ-ACK information overlaps a downlink symbol in a first slot in which the transmission of the first HARQ-ACK information for first SPS PDSCH reception is scheduled, deferring the transmission of the first HARQ-ACK information to a second slot: in the second slot in which transmission of second HARQ-ACK information for PDSCH reception, based on first downlink control information (DCI), is scheduled, determining a first HARQ-ACK codebook including the first HARQ-ACK information and the second HARQ-ACK information; receiving second DCI for triggering retransmission of the first HARQ-ACK codebook; and transmitting, on the basis of the second DCI, a second HARQ-ACK codebook in a third slot that is subsequent to the second slot. The second HARQ-ACK codebook does not include the first HARQ-ACK information but includes the first HARQ-ACK information.

## Description

### Technical Field

The present disclosure relates to a wireless communication system.

### Background Art

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### Detailed Description of the Invention

### Technical Problem

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

Further, there is a need for an efficient HARQ feedback scheme which takes into account a time division duplex (TDD)-related operation, semi-static scheduling, prioritization, and so on.

Further, considering that a HARQ-ACK response which has been canceled or has failed to be successfully received at a BS may cause a PDSCH retransmission, there is a need for a method of transmitting the canceled or failed HARQ-ACK response to the BS.

The objects to be achieved with the present disclosure are not limited to what has been particularly described hereinabove and other objects not described herein will be more clearly understood by persons skilled in the art from the following detailed description.

### Technical Solution

According to one aspect of the present disclosure, a method of transmitting hybrid automatic repeat request-acknowledgment (HARQ-ACK) information by a user equipment (UE) in a wireless communication system is provided. The method includes deferring a transmission of first HARQ-ACK information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in the second slot in which a transmission of the second HARQ-ACK information for a PDSCH reception is scheduled based on first downlink control information (DCI); receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without the first HARQ-ACK information.

According to another aspect of the present disclosure, a UE for transmitting HARQ-ACK information in a wireless communication system is provided. The UE includes: at least one transceiver; at least one processor; and at least one computer memory operably connectable to the at least one processor and storing instructions that, when executed, cause the at least one processor to perform operations. The operations include: deferring a transmission of first HARQ-ACK information for a first SPS PDSCH reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in a second slot in which a transmission of the second HARQ-ACK information for a PDSCH reception is scheduled based on first DCI; receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without including the first HARQ-ACK information.

According to another aspect of the present disclosure, a processing device in a wireless communication system is provided. The processing device includes: at least one processor; and at least one computer memory operably connectable to the at least one processor and storing instructions that, when executed, cause the at least one processor to perform operations. The operations include: deferring a transmission of first HARQ-ACK information for a first SPS PDSCH reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in a second slot in which a transmission of the second HARQ-ACK information for a PDSCH reception is scheduled based on first DCI; receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without including the first HARQ-ACK information.

According to another aspect of the present disclosure, a computer-readable storage medium is provided. The computer-readable storage medium stores at least one program code including instructions that, when executed, cause at least one processor to perform operations. The operations include: deferring a transmission of first HARQ-ACK information for a first SPS PDSCH reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in a second slot in which a transmission of the second HARQ-ACK information for a PDSCH reception is scheduled based on first DCI; receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without including the first HARQ-ACK information.

According to another aspect of the present disclosure, a computer program stored in a computer-readable storage medium is provided. The computer program includes at least one program code including instructions that, when executed, cause at least one processor to perform operations. The operations include: deferring a transmission of first HARQ-ACK information for a first SPS PDSCH reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in a second slot in which a transmission of the second HARQ-ACK information for a PDSCH reception is scheduled based on first DCI; receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without including the first HARQ-ACK information.

According to another aspect of the present disclosure, a method of receiving HARQ-ACK information by a base station (BS) in a wireless communication system is provided. The method includes: determining to defer a reception of first HARQ-ACK information for a first SPS PDSCH reception from a first slot in which the reception of the first HARQ-ACK information is scheduled to a second slot, based on the reception of the first HARQ-ACK information overlapping with a downlink symbol in the first slot; transmitting second DCI triggering a retransmission of a first HARQ-ACK codebook including the first HARQ-ACK information and second HARQ-ACK information in a second slot in which a reception of the second HARQ-ACK information for a PDSCH transmission is scheduled based on first DCI; and receiving a second HARQ-ACK codebook in a third slot later than the second slot, based on the second DCI. The second HARQ-ACK codebook includes the first HARQ-ACK information without including the first HARQ-ACK information.

According to another aspect of the present disclosure, a BS for receiving HARQ-ACK information in a wireless communication system is provided. The BS includes: at least one transceiver; at least one processor; and at least one computer memory operably connectable to the at least one processor and storing instructions that, when executed, cause the at least one processor to perform operations. The operations include: determining to defer a reception of first HARQ-ACK information for a first SPS PDSCH reception from a first slot in which the reception of the first HARQ-ACK information is scheduled to a second slot, based on the reception of the first HARQ-ACK information overlapping with a downlink symbol in the first slot; transmitting second DCI triggering a retransmission of a first HARQ-ACK codebook including the first HARQ-ACK information and second HARQ-ACK information in a second slot in which a reception of the second HARQ-ACK information for a PDSCH transmission is scheduled based on first DCI; and receiving a second HARQ-ACK codebook in a third slot later than the second slot, based on the second DCI. The second HARQ-ACK codebook includes the first HARQ-ACK information without including the first HARQ-ACK information.

In each aspect of the present disclosure, the first HARQ-ACK codebook may include third HARQ-ACK information for a second SPS PDSCH, scheduled to be transmitted in the second slot. The method or operations may include deferring a transmission of the third HARQ-ACK information to a fourth slot later than the second slot, based on a transmission of the first HARQ-ACK codebook overlapping with a downlink symbol in the second slot. The third HARQ-ACK information may not be included in the second HARQ-ACK codebook, based on the deferral of the transmission of the third HARQ-ACK information from the second slot to the fourth slot.

In each aspect of the present disclosure, the first DCI may include information regarding the first slot.

In each aspect of the present disclosure, the information regarding the first slot may be a slot offset indicating a difference between the first slot and a slot in which the first DCI is received.

In each aspect of the present disclosure, the first DCI may include a priority indicator. The first HARQ-ACK information and the second HARQ-ACK information may have the same priority as the priority indicator.

The foregoing solutions are merely a part of the examples of the present disclosure and various examples into which the technical features of the present disclosure are incorporated may be derived and understood by persons skilled in the art from the following detailed description.

### Advantageous Effects

According to some implementation(s) of the present disclosure, a wireless communication signal may be efficiently transmitted/received. Accordingly, the total throughput of a wireless communication system may be raised.

According to some implementation(s) of the present disclosure, various services with different requirements may be efficiently supported in a wireless communication system.

According to some implementation(s) of the present disclosure, delay/latency generated during radio communication between communication devices may be reduced.

According to some implementation(s) of the present disclosure, HARQ-ACK information which has been canceled or has failed to be successfully received at a BS may be provided to the BS based on a request of the BS.

According to some implementation(s) of the present disclosure, a UE and a BS which support HARQ-ACK deferral and HARQ-ACK retransmission may determine the content and size of a HARQ-ACK codebook transmitted/received based on a retransmission request without ambiguity.

According to some implementation(s) of the present disclosure, signaling overhead related to a HARQ-ACK retransmission may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates slot structures used in a 3GPP-based system;
FIG. 7 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 8 illustrates a hybrid automatic repeat request-acknowledgement (HARQ-ACK) transmission/reception procedure;
FIG. 9 illustrates exemplary HARQ-ACK deferral;
FIG. 10 illustrates exemplary PUCCH cell switching;
FIG. 11 illustrates a UE operation flow according to some implementations of the present disclosure;
FIG. 12 illustrates a BS operation flow according to some implementations of the present disclosure; and
FIGS. 13 to 15 illustrate examples in which HARQ deferral (i.e., HARQ-ACK deferral) and a one-shot HARQ-ACK retransmission are performed together according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, reception of physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

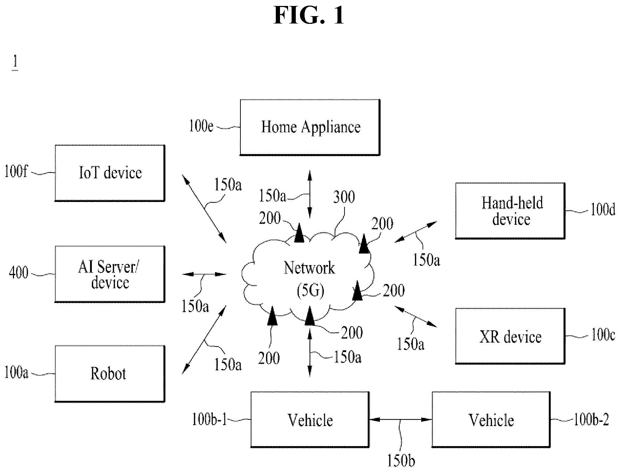

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

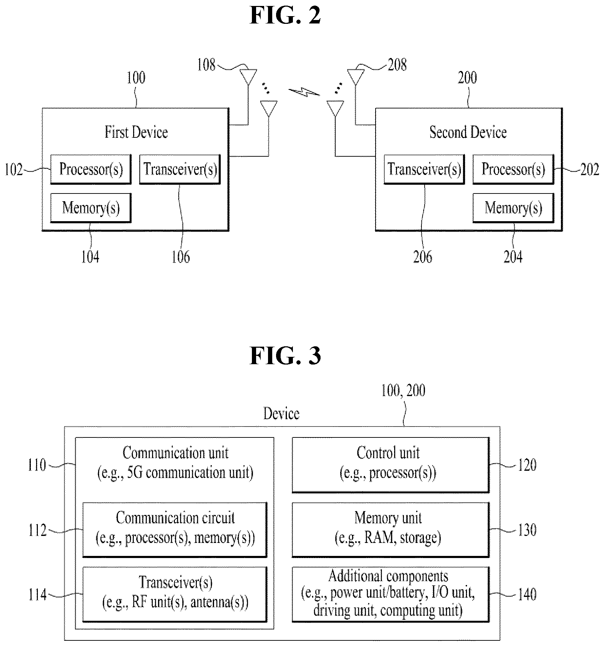

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore/below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore/below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

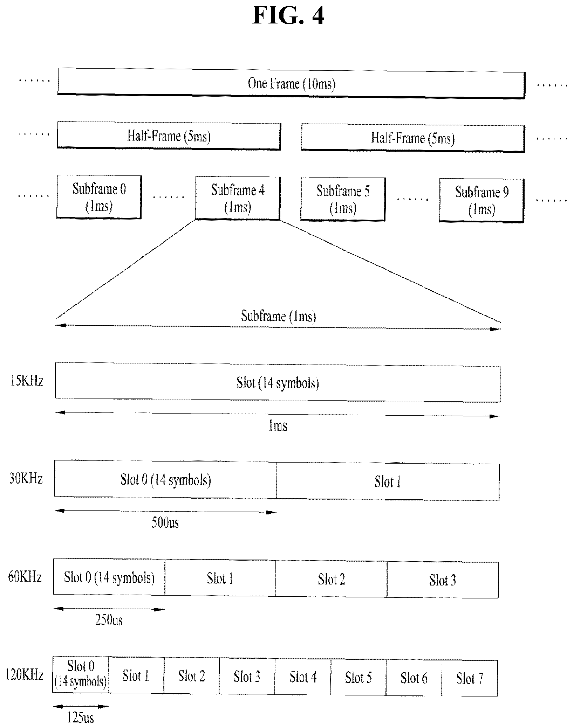

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f}= (Δfₘₐₓ*N_{f}/100)*T_{c} = 10ms and is divided into two half-frames of 5 ms each. A basic time unit for NR is T_{c} = 1/(△fₘₐₓ*N_{f}) where △fₘₐₓ = 480*10³Hz and Nf = 4096. For reference, a basic time unit for LTE is Tₛ = 1/(△f_{ref}*N_{f,ref}) where △f_{ref} = 15*103Hz and N_{f,ref} = 2048. T_{c} and Tf have the relationship of a constant κ = T_{c}/T_{f} = 64. Each half-frame includes 5 subframes and a duration T_{sf} of a single subframe is 1ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}* 15kHz. The table below shows the number of OFDM symbols (N^{slot}_{symb}) per slot, the number of slots (N^{frame,u}ₛₗₒₜ₎ per frame, and the number of slots (N^{subframe,u}ₛₗₒₜ) per subframe.

**Table 1**

| *u* | *N*^{slot}_{symb} | *N*^{frame,u}ₛₗₒₜ | *N*^{*s*ubframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

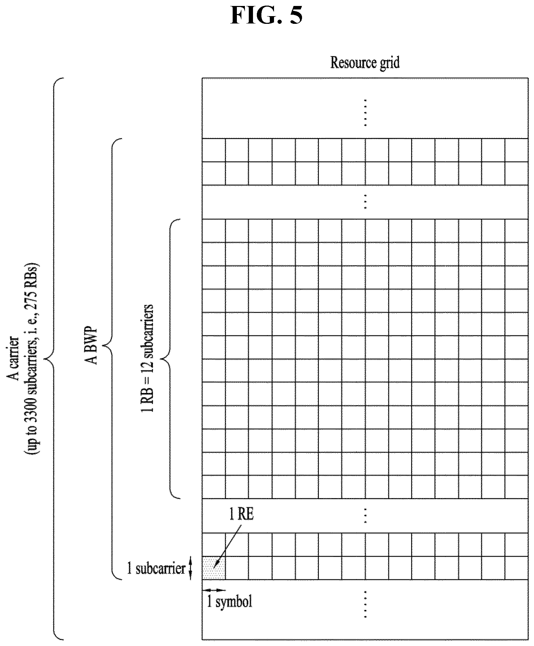

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher-layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u*, and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration u is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

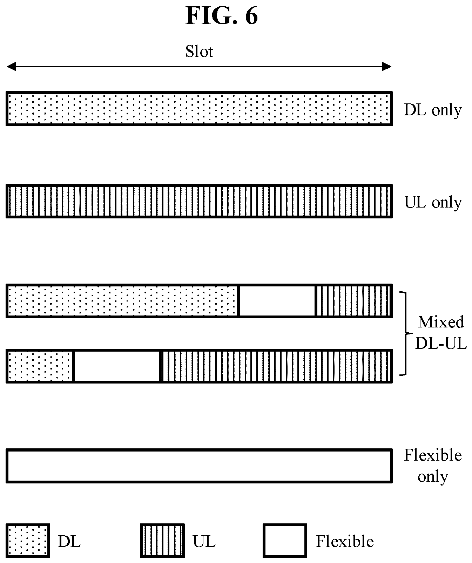

FIG. 6 illustrates slot structures used in a 3GPP-based system. In all 3GPP-based systems, for example, in an NR system, each slot may have a self-contained structure including i) a DL control channel, ii) DL or UL data, and/or iii) a UL control channel. For example, the first N symbols in a slot may be used to transmit the DL control channel (hereinafter, DL control region) and the last M symbols in a slot may be used to transmit the UL control channel (hereinafter, UL control region), where N and M are integers other than negative numbers. A resource region (hereinafter, data region) between the DL control region and the UL control region may be used to transmit DL data or UL data. Symbols in a single slot may be divided into group(s) of consecutive symbols that may be used as DL symbols, UL symbols, or flexible symbols. Hereinbelow, information indicating how each symbol in slot(s) is used will be referred to as a slot format. For example, which symbols in slot(s) are used for UL and which symbols in slot(s) are used for DL may be defined by a slot format.

When a BS intends to operate a serving cell in time division duplex (TDD) mode, the BS may configure a pattern for UL and DL allocation for the serving cell through higher layer (e.g., RRC) signaling. For example, the following parameters may be used to configure a TDD DL-UL pattern:
- *dl-UL-TransmissionPeriodicity* that provides a periodicity of the DL-UL pattern;
- *nrofDownlinkSlots* that provides the number of consecutive full DL slots at the beginning of each DL-UL pattern, where the full DL slots are slots having only DL symbols;
- *nrofDownlinkSymbols* that provides the number of consecutive DL symbols at the beginning of a slot immediately following the last full DL slot;
- *nrofUplinkSlots* that provides the number of consecutive full UL slots at the end of each DL-UL pattern, where the full UL slots are slots having only UL symbols; and
- *nrofUplinkSymbols* that provides the number of consecutive UL symbols in the end of a slot immediately preceding the first full UL slot.

The remaining symbols that are not configured as either DL symbols or UL symbols among symbols in the DL-UL pattern are flexible symbols.

If the UE is provided with a configuration for the TDD DL-UL pattern, i.e., a TDD UL-DL configuration (e.g., *tdd-UL-DL-ConfigurationCommon,* or *tdd-UL-DLConfigurationDedicated*)*,* through higher-layer signaling, the UE sets a slot format per slot over a number of slots based on the configuration.

For symbols, although there may be various combinations of DL symbols, UL symbols, and flexible symbols, a predetermined number of combinations may be predefined as slot formats and the predefined slot formats may be respectively identified by slot format indexes. The following table shows a part of the predefined slot formats. In the table below, D denotes a DL symbol, U denotes a UL symbol, and F denotes a flexible symbol.

**Table 3**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| **0** | **D** | **D** | **D** | **D** | **D** | **D** | **D** | **D** | **D** | **D** | **D** | **D** | **D** | **D** |
| **1** | **U** | **U** | **U** | **U** | **U** | **U** | **U** | **U** | **U** | **U** | **U** | **U** | **U** | **U** |
| **2** | **F** | **F** | **F** | **F** | **F** | **F** | **F** | **F** | **F** | **F** | **F** | **F** | **F** | **F** |
| **3** | **D** | **D** | **D** | **D** | **D** | **D** | **D** | **D** | **D** | **D** | **D** | **D** | **D** | **F** |
| **4** | **D** | **D** | **D** | **D** | **D** | **D** | **D** | **D** | **D** | **D** | **D** | **D** | **F** | **F** |
| **5** | **D** | **D** | **D** | **D** | **D** | **D** | **D** | **D** | **D** | **D** | **D** | **F** | **F** | **F** |
| **6** | **D** | **D** | **D** | **D** | **D** | **D** | **D** | **D** | **D** | **D** | **F** | **F** | **F** | **F** |
| **7** | **D** | **D** | **D** | **D** | **D** | **D** | **D** | **D** | **D** | **F** | **F** | **F** | **F** | **F** |
| **8** | **F** | **F** | **F** | **F** | **F** | **F** | **F** | **F** | **F** | **F** | **F** | **F** | **F** | **U** |
| **9** | **F** | **F** | **F** | **F** | **F** | **F** | **F** | **F** | **F** | **F** | **F** | **F** | **U** | **U** |
| **10** | **F** | **U** | **U** | **U** | **U** | **U** | **U** | **U** | **U** | **U** | **U** | **U** | **U** | **υ** |
| **11** | **F** | **F** | **U** | **U** | **U** | **U** | **U** | **U** | **U** | **U** | **U** | **U** | **U** | **U** |
| **12** | **F** | **F** | **F** | **U** | **U** | **U** | **U** | **U** | **U** | **U** | **U** | **U** | **U** | **U** |
| **13** | **F** | **F** | **F** | **F** | **U** | **U** | **U** | **U** | **U** | **U** | **U** | **U** | **U** | **υ** |
| **14** | **F** | **F** | **F** | **F** | **F** | **U** | **U** | **U** | **U** | **U** | **U** | **U** | **U** | **U** |
| **15** | **F** | **F** | **F** | **F** | **F** | **F** | **U** | **U** | **U** | **U** | **U** | **U** | **U** | **U** |
| **16** | **D** | **F** | **F** | **F** | **F** | **F** | **F** | **F** | **F** | **F** | **F** | **F** | **F** | **F** |
| **17** | **D** | **D** | **F** | **F** | **F** | **F** | **F** | **F** | **F** | **F** | **F** | **F** | **F** | **F** |
| **18** | **D** | **D** | **D** | **F** | **F** | **F** | **F** | **F** | **F** | **F** | **F** | **F** | **F** | **F** |
| **19** | **D** | **F** | **F** | **F** | **F** | **F** | **F** | **F** | **F** | **F** | **F** | **F** | **F** | **U** |
| **20** | **D** | **D** | **F** | **F** | **F** | **F** | **F** | **F** | **F** | **F** | **F** | **F** | **F** | **U** |
| **...** | **...** | | | | | | | | | | | | | |

To indicate which slot format is used in a specific slot among the predefined slot formats, the BS may configure a set of slot format combinations applicable to a corresponding serving cell per cell with respect to a set of serving cells through higher layer (e.g., RRC) signaling and cause the UE to monitor a group-common PDCCH for slot format indicator(s) (SFI(s)) through higher layer (e.g., RRC) signaling. Hereinafter, DCI carried by the group-common PDCCH for the SFI(s) will be referred to as SFI DCI. DCI format 2_0 is used as the SFI DCI. For example, for each serving cell in a set of serving cells, the BS may provide the UE with the (start) position of a slot format combination ID (i.e., SFI-index) for a corresponding serving cell in the SFI DCI, a set of slot format combinations applicable to the serving cell, and a reference subcarrier spacing configuration for each slot format in a slot format combination indicated by an SFI-index value in the SFI DCI. One or more slot formats are configured for each slot format combination in the set of the slot format combinations and the slot format combination ID (i.e., SFI-index) is assigned to the slot format combination. For example, when the BS intends to configure the slot format combination with N slot formats, N slot format indexes among slot format indexes for the predefined slot formats (e.g., see Table 3) may be indicated for the slot format combination. In order to configure the UE to monitor the group-common PDCCH for the SFIs, the BS informs the UE of an SFI-RNTI corresponding to a radio network temporary identifier (RNTI) used for an SFI and the total length of a DCI payload having CRC scrambled with the SFI-RNTI. Upon detecting the PDCCH based on the SFI-RNTI, the UE may determine slot format(s) for the corresponding serving cell from an SFI-index for the serving cell among SFI-indexes in the DCI payload in the PDCCH.

Symbols indicated as flexible symbols by the TDD DL-UL pattern configuration may be indicated as UL symbols, DL symbols, or flexible symbols by the SFI DCI. Symbols indicated as the DL/UL symbols by the TDD DL-UL pattern configuration are not overridden as the UL/DL symbols or the flexible symbols by the SFI DCI.

If the TDD DL-UL pattern is not configured, the UE determines whether each slot is used for UL or DL and determines symbol allocation in each slot based on the SFI DCI and/or on DCI for scheduling or triggering DL or UL signal transmission (e.g., DCI format 1_0, DCI format 1_1, DCI format 1_2, DCI format 0_0, DCI format 0_1, DCI format 0_2, or DCI format 2_3).

NR frequency bands are defined as two types of frequency ranges, i.e., FR1 and FR2. FR2 is also referred to as millimeter wave (mmW). The following table shows frequency ranges within which NR may operate.

**Table 4**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 5.
(0) PUCCH format 0 (PF0 or F0)
   - Supported UCI payload size: up to K bits (e.g., K=2)
   - Number of OFDM symbols constituting a single PUCCH: 1 to X symbols (e.g., X=2)
   - Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
   - Configuration for PUCCH format 0 includes the following parameters for a corresponding PUCCH resource: an index for initial cyclic shift, the number of symbols for PUCCH transmission, and/or the first symbol for PUCCH transmission.
(1) PUCCH format 1 (PF1 or F1)
   - Supported UCI payload size: up to K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
   - Configuration for PUCCH format 1 includes the following parameters for a corresponding PUCCH resource: an index for initial cyclic shift, the number of symbols for PUCCH transmission, the first symbol for PUCCH transmission, and/or an index for the OCC.
(2) PUCCH format 2 (PF2 or F2)
   - Supported UCI payload size: more than K bits (e.g., K=2)
   - Number of OFDM symbols constituting a single PUCCH: 1 to X symbols (e.g., X=2)
   - Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
   - Configuration for PUCCH format 2 includes the following parameters for a corresponding PUCCH resource: the number of PRBs, the number of symbols for PUCCH transmission, and/or the first symbol for PUCCH transmission.
(3) PUCCH format 3 (PF3 or F3)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).
   Configuration for PUCCH format 3 includes the following parameters for a corresponding PUCCH resource: the number of PRBs, the number of symbols for PUCCH transmission, and/or the first symbol for PUCCH transmission.
(4) PUCCH format 4 (PF4 or F4)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
   - Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 5**

| PUCCH format | Length in OFDM symbols N^{PUCCH}_{symb} | Number of bits | Usage | Etc. |
|---|---|---|---|---|
| 0 | 1 - 2 | =<2 | HARQ, SR | Sequence selection |
| 1 | 4 - 14 | =<2 | HARQ, [SR] | Sequence modulation |
| 2 | 1 -2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   ...
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 6).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher-layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher-layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

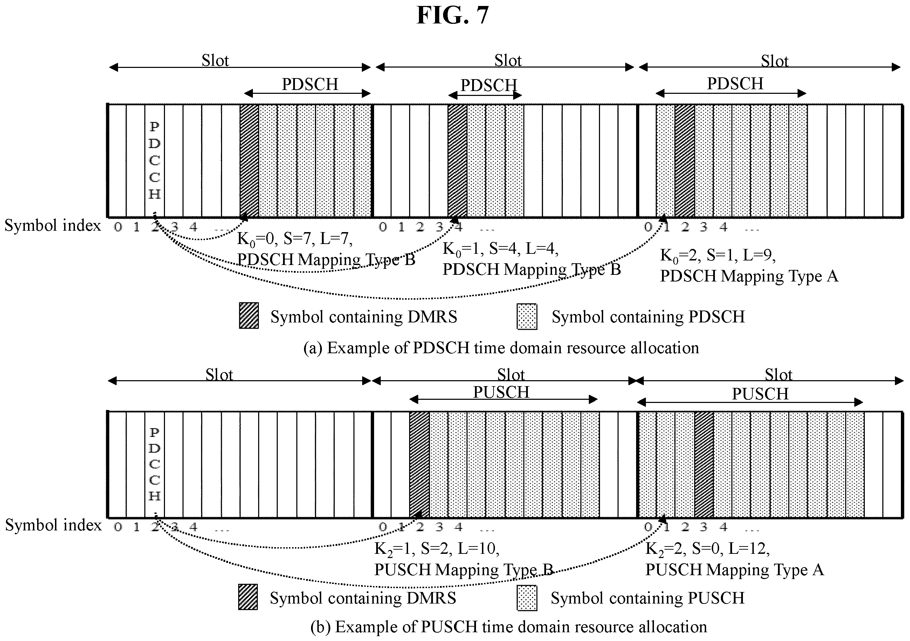

FIG. 7 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index *m*+1 pointing to the allocation table, indicating a combination of the start symbol *S,* the length *L,* and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and *S* (derived from *SLIV*) and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame * *numberOfSymbolsPerSlot*) + symbol number in the slot] = (*timeDomainOffset* * *numberOfSymbolsPerSlot* + *S* + N * *periodicity)* modulo (1024 * *numberOfSlotsPerFrame* * *numberOfSymbolsPerSlot*)*,* for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN * *numberOfSlotsPerFrame * numberOfSymbolsPerSlot*) + (slot number in the frame * *numberOfSymbolsPerSlot*) + symbol number in the slot] = [(SFN_{start time} * *numberOfSlotsPerFrame* * *numberOfSymbolsPerSlot* + slot_{start time} * *numberOfSymbolsPerSlot* + symbol_{start time}) + N * *periodicity*] modulo (1024 * *numberOfSlotsPerFrame* * *numberOfSymbolsPerSlot*)*,* for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re)transmission based on a configured grant in which the UE should not autonomously perform retransmission based on the HARQ process of the (re)transmission. cg-*Retransmission Timer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [floor(CURRENT_symbol/*periodicity*)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes* + *harq-ProcID-Offset2,* where CURRENT_symbol = (SFN * *numberOfSlotsPerFrame* * *numberOfSymbolsPerSlot* + slot number in the frame * *numberOfSymbolsPerSlot* + symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame* * SFN_{start time} + slot_{start time}) + N * *periodicity * numberOfSlotsPerFrame* / 10] modulo (1024 * *numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / (*numberOfSlotsPerFrame* * *periodicity*))] modulo *nrofHARQ-Processes,* where CURRENT_slot = [(SFN * *numberOfSlotsPerFrame*) + slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 6 and Table 7. Table 6 shows an example of special fields for DL SPS and UL grant Type 2 scheduling activation PDCCH validation, and Table 7 shows an example of special fields for DL SPS and UL grant Type 2 scheduling release PDCCH validation.

**Table 6**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 7**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

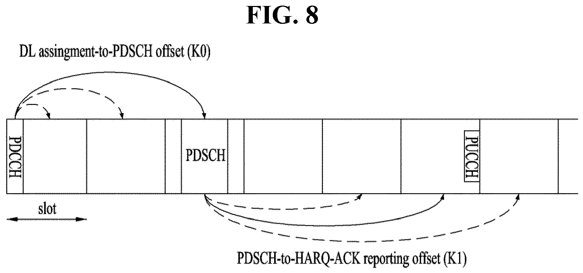

FIG. 8 illustrates a HARQ-ACK transmission/reception procedure.

Referring to FIG. 8, the UE may detect a PDCCH in slot n. Next, the UE may receive a PDSCH in slot n+K0 according to scheduling information received through the PDCCH in slot n and then transmit UCI through a PUCCH in slot n+K1. In this case, the UCI includes a HARQ-ACK response for the PDSCH. In some scenarios, PUCCH feedback may be performed based on a subslot including fewer than 14 OFDM symbols (e.g., including 2 to 7 symbols) as well as based on a slot including 14 OFDM symbols.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ {1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in a HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of a HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The Type-3 HARQ-ACK codebook may be applied to one-shot feedback. For example, when the UE receives *pdsch-HARQ-ACK-OneShotFeedback* by RRC signaling and detects a DCI format including a one-shot HARQ-ACK request field set to a value of 1 in any PDCCH monitoring occasion, the UE includes HARQ-ACK information in the Type-3 HARQ-ACK codebook.

If the UE is provided with *pdsch-HARQ-ACK-CodebookList* through RRC signaling, the UE may be instructed to generate one or multiple HARQ-ACK codebooks by *pdsch-HARQ-ACK-CodebookList.* If the UE is instructed to generate one HARQ-ACK codebook, the HARQ-ACK codebook is associated with a PUCCH of priority index 0. If the UE is provided with *pdsch-HARQ-ACK-CodebookList,* the UE multiplexes only HARQ-ACK information associated with the same priority index in the same HARQ-ACK codebook. If the UE is instructed to generate two HARQ-ACK codebooks, a first HARQ-ACK codebook is associated with a PUCCH of priority index 0, and a second HARQ-ACK codebook is associated with a PUCCH of priority index 1.

A unit of a time difference (e.g., a PDSCH-to-HARQ_feedback timing indicator) between a DL data channel and PUCCH transmission for HARQ-ACK feedback transmission may be determined by a pre-configured subslot length (e.g., the number of symbols constituting a subslot). For example, a unit of the time difference from the DL data channel to a PUCCH for HARQ-ACK feedback transmission may be configured by parameter *"subslotLengthForPUCCH"* in *PUCCH-Config,* which is configuration information used to configure UE-specific PUCCH parameters. According to these scenarios, a length unit of the PDSCH-to-HARQ feedback timing indicator may be configured for each HARQ-ACK codebook.

In some scenarios, UL or DL scheduling may be dynamically or semi-statically performed, and the BS may configure or indicate a transmission direction (e.g., DL, UL, or flexible) of each symbol for or to the UE semi-statically using a *tdd-UL-DL-ConfigurationCommon* or *tdd-UL-DL-ConfigurationDedicated* message or dynamically using DCI format 2_0. UL or DL scheduling configured by the configured/indicated transmission direction may also be cancelled.

In some scenarios, UL or DL scheduling may be dynamically or semi-statically performed, and the BS may configure or indicate a transmission direction (e.g., DL, UL, or flexible) of each symbol for or to the UE semi-statically using a *tdd-UL-DL-ConfigurationCommon* or *tdd-UL-DL-ConfigurationDedicated* message or dynamically using DCI format 2_0. UL or DL scheduling configured by the configured/indicated transmission direction may also be cancelled.

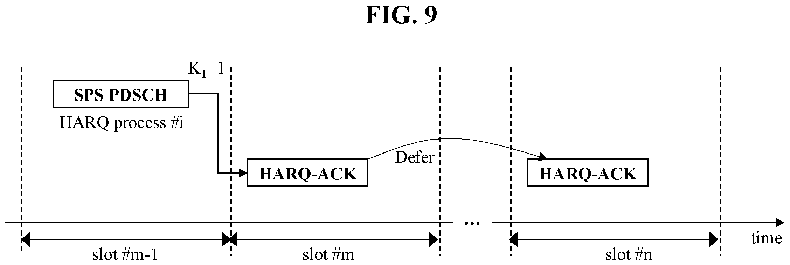

FIG. 9 illustrates exemplary HARQ-ACK deferral.

In some scenarios (e.g., 3GPP NR Rel-16), if the UE receives a PDSCH scheduled by the BS, the UE may transmit a PUCCH carrying a HARQ-ACK for the PDSCH (hereinafter, HARQ-ACK PUCCH) at a time designated by scheduling information for the PDSCH. However, these series of operations always cause the UE to transmit the PUCCH after a lapse of a predetermined time from reception of a semi-persistently configured SPS PDSCH. As a result, a TDD pattern that is not aligned with the period of the SPS PDSCH may be used, or PUCCH transmission may be easily canceled by the dynamic TDD operation of the BS. Further, PDSCH transmission associated with the canceled PUCCH transmission may also be canceled, or retransmission may be requested. To solve these issues, an operation in which the UE defers a PUCCH timing determined for a PDSCH in a prescribed or arbitrary manner, that is, delaying operation is being considered. For example, when a PUCCH configured for carrying a HARQ-ACK for an SPS PDSCH (hereinafter, SPS HARQ-ACK) is canceled by a configured or indicated transmission direction, HARQ-ACK deferral, which delays the HARQ-ACK transmission after the originally expected time, may be considered. Referring to FIG. 9, for example, when an SPS PDSCH in slot #m-1 uses HARQ process #i, and when HARQ-ACK transmission for the SPS PDSCH is scheduled in slot #m, the UE may determine to defer a PUCCH for the HARQ-ACK transmission for the SPS PDSCH from in slot #m to slot #n based on predetermined conditions. According to such HARQ-ACK deferral, even if PUCCH transmission is canceled, the UE and BS may transmit/receive HARQ-ACK information for the SPS PDSCH later.

In some scenarios (e.g., LTE-based systems or NR Rel-16-based systems), a CC (i.e., serving cell) used by the UE for PUCCH transmission may be configured semi-statically through RRC signaling from the BS. In some scenarios, to enable the UE to transmit a PUCCH as quickly as possible, dynamically switching a carrier (or cell) to transmit the PUCCH by determining a CC to transmit the PUCCH based on L1 signaling from the BS or by UE's arbitrary determination, or semi-statically switching a cell (or cell) to transmit the PUCCH according to predefined rules is under consideration. In the present disclosure, switching a CC may refer to switching a cell including the CC. In other words, carrier switching described herein may mean switching from one cell to another cell or may also refer to switching between carriers within a single cell.

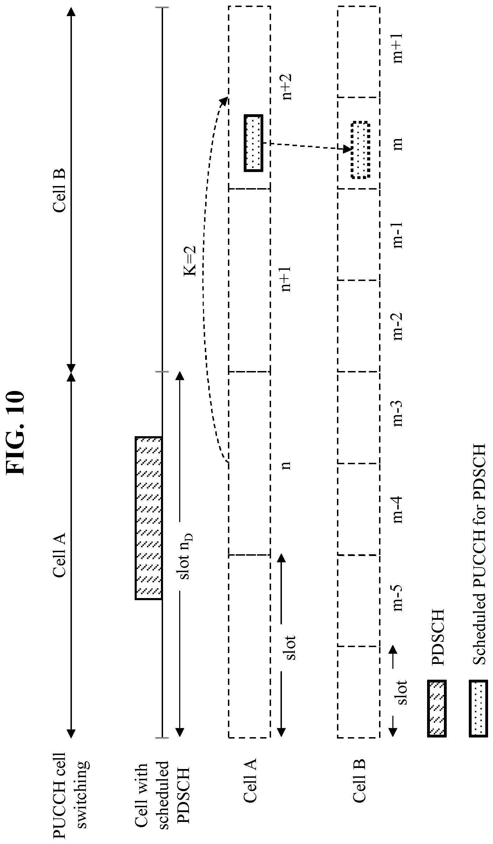

FIG. 10 illustrates exemplary PUCCH cell switching. For the sake of clarity in the description, FIG. 10 illustrates an example where a cell on which a PDSCH is transmitted differs from candidate PUCCH cells for PUCCH cell switching and the SCS of the cell on which the PDSCH is transmitted also differs from the SCSs of the candidate PUCCH cells. However, the PDSCH may be transmitted on a candidate PUCCH cell, and the SCS of the cell on which the PDSCH is transmitted may be the same as the SCSs of some candidate PUCCH cells.

In some implementations of the present disclosure, when the UE is capable of using multiple CCs, the UE may change a PUCCH transmission carrier (e.g., PUCCH cell) according to predefined rules or change the PUCCH transmission carrier (e.g., PUCCH cell) based on L1 signaling provided by the BS, thereby enabling the UE to perform continuous UL transmission.

In some implementations, the UE may use a set of HARQ-ACK feedback timing values (e.g., *dl-DataToUL-ACK, dl-DataToUL-ACK-r16,* or *dl-DataToUL-ACK- DCI-1-2-r16),* which are configured on the primary cell of a PUCCH group where a PDSCH is scheduled, to select a PUCCH resource. For example, if the PUCCH group where the PDSCH is scheduled is an MCG, the UE may determine a HARQ-ACK feedback timing value K for the PDSCH based on a set of HARQ-ACK feedback timing values configured on the Pcell. If the PUCCH group where the PDSCH is scheduled is an SCG, the UE may determine the HARQ-ACK feedback timing value K for the PDSCH based on a set of HARQ-ACK feedback timing values configured on a PSCell of the SCG. If the PUCCH group where the PDSCH is scheduled is a primary PUCCH group, the UE may determine the HARQ-ACK feedback timing value K for the PDSCH based on the set of HARQ-ACK feedback timing values configured on the Pcell. If the PUCCH group where the PDSCH is scheduled is a secondary PUCCH group, the UE may determine the HARQ-ACK feedback timing value K for the PDSCH based on a set of HARQ-ACK feedback timing values configured on a PUCCH-SCell of the secondary PUCCH group.

Referring to FIG. 10, for example, for PDSCH reception that ends in DL slot n_{D}, if no PUCCH cell switching is configured, supported, or indicated, the UE may transmit a PUCCH including HARQ-ACK information for the PDSCH reception in UL slot n+k on a primary cell (e.g., cell A in FIG. 10), where slot n is the last slot for PUCCH transmission overlapping with slot n_{D}, and k may be provided by the determined HARQ-ACK feedback timing value K. In some implementations, the determined HARQ-ACK feedback timing value K may be counted based on the slots on the primary cell. On the other hand, when PUCCH cell switching is configured, supported, or indicated, a PUCCH cell may be determined according to predefined/preconfigured rules or L1 signaling for a slot on the primary cell determined based on the determined HARQ-ACK feedback timing value K. For example, referring to FIG. 10, when the PUCCH cell switching is configured, supported, or indicated, and when the PUCCH cell for slot n+2 is determined to be cell B according to predefined/preconfigured rules or L1 signaling, the UE may perform PUCCH transmission for the PDSCH, for example, in the earliest slot, slot m among the slots on cell B overlapping with slot n+2 on cell A, instead of performing the PUCCH transmission for the PDSCH in slot n+2 on cell A.

In the present disclosure, in case the UE does not transmit a HARQ-ACK response for a PDSCH reception in view of prioritization between priorities or the BS fails to receive the HARQ-ACK response, methods of enabling the BS to receive the HARQ-ACK response again are considered. A description will be given below of implementations of the present disclosure regarding a signaling method for requesting a UE to retransmit a HARQ-ACK response by a BS and a HARQ-ACK response retransmission method for reconstructing a HARQ-ACK response and retransmitting it on a PUCCH or PUSCH by a UE in response to a HARQ-ACK response retransmission request of a BS.

In an NR system, UL or DL scheduling may be performed dynamically or semi-statically, and a BS may configure or indicate the transmission direction of each symbol (DL symbol, UL symbol, or flexible symbol) for or to a UE, semi-statically by a tdd-UL-DL-ConfigurationCommon or tdd-UL-DL-ConfigurationDedicated message or dynamically by DCI format 2_0. The configured UL or DL scheduling may be canceled by the transmission direction configured in this manner. That is, it is possible to cancel a PUCCH configured for transmitting a HARQ-ACK (hereinafter, an SPS HARQ-ACK) for an SPS PDSCH by a configured or indicated transmission direction.

Although a HARQ-ACK response transmission based on dynamic PDSCH scheduling is not canceled by the configured or indicated transmission direction, when a HARQ-ACK included in a PUCCH is included in a low-priority HARQ-ACK codebook, the PUCCH transmission itself may be canceled due to prioritization between priorities, and the BS may not successfully receive the PUCCH transmission due to a channel change or the like regardless of the PDSCH scheduling schemes.

When the HARQ-ACK response transmission is canceled or failed, the BS may not determine whether the corresponding PDSCH transmission was successful, resulting in a PDSCH retransmission. Basically, this may create an additional delay time in the PDSCH transmission, and when a PUCCH transmission carrying a HARQ-ACK codebook including multiple HARQ-ACKs is cancelled, a number of PDSCHs corresponding to the HARQ-ACK codebook need to be retransmitted. This may cause a significant problem with system resource availability. Although this problem may be solved by increasing the size of time-frequency resources used for the PUCCH/PUSCH and thus increasing the reliability of a UL transmission carrying a HARQ-ACK, the UL radio resources of the system may be too limited to use UL time-frequency resources large enough to always obtain satisfactory reliability.

In the present disclosure, a description is given of implementations of signaling of a BS that requests retransmission of a HARQ-ACK response so that the BS receives the HARR-ACK response again, in case a UE does not transmit the HARQ-ACK response for a PDSCH reception of the due to prioritization between priorities or the BS fails to receive the HARQ-ACK response. The UE according to some implementations of the present disclosure may receive the request and retransmit a previous scheduled HARQ-ACK response or HARQ-ACK codebook, or perform a PUCCH transmission including the HARQ-ACK response or HARQ-ACK codebook again.

In some implementations of the present disclosure, the UE may receive, from the BS, L1 signaling (e.g., DCI) indicating a previous PUCCH/PUSCH transmission which was performed or canceled and a new PUCCH resource, and transmit a HARQ-ACK response or UCI included in the previous PUCCH/PUSCH transmission which the UE performed or would perform, indicated by the L1 signaling (e.g., DCI), in the indicated new PUCCH resource. For example, with reference to slots of PUCCH transmissions on a primary cell and for Type-1 or Type-2 HARQ-ACK codebooks, the UE that transmitted or would transmit a PUCCH or PUSCH having a first HARQ-ACK codebook in slot m may be indicated to transmit the PUCCH having the HARQ-ACK codebook in slot n+k later than slot m, by a DCI format received on a PDCCH ending in slot n, where k is a positive integer. The UE may determine k and a resource for the PUCCH. For example, the UE may determine k based on the value of a HARQ_feedback timing indicator field in the DCI format and HARQ-ACK feedback timing values (e.g., HARQ_feedback timing indicator field values provided by RRC parameter(s) dl-DataToUL-ACK, dl-DataToUL-ACK, and/or dl-DataToUL-ACKForDCIFormat1_2) configured for the primary cell, and determine a PUCCH resource for the requested HARQ-ACK codebook from among PUCCH resources configured for a cell on which the PUCCH is transmitted. When the UE receives a periodic cell switching pattern for PUCCH transmissions through a higher layer parameter provided by the BS, the UE may determine a corresponding cell based on the periodic cell switching pattern.

In some implementations of the present disclosure, the UE may defer a HARQ-ACK transmission for an SPS PDSCH to a later slot than an original slot indicated or configured by the BS. In this case, in some implementations of the present disclosure, the BS may allow the UE to perform an additional PDSCH reception for the same HARQ process by providing additional PDSCH scheduling, and the UE may omit or multiplex the deferred HARQ-ACK transmission.

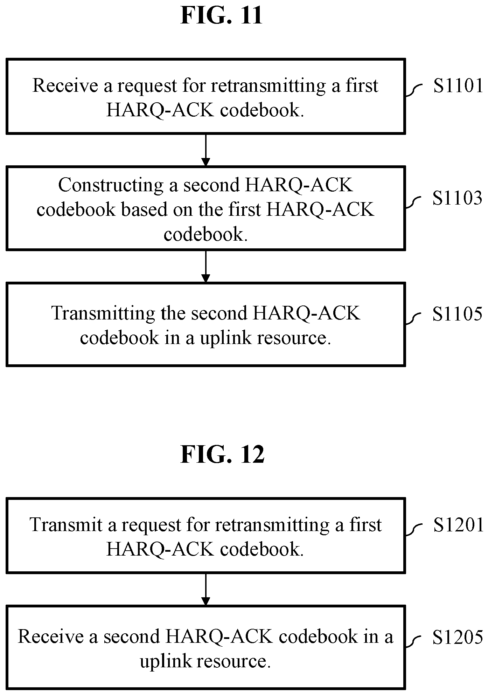

FIG. 11 illustrates a UE operation flow according to some implementations of the present disclosure.

The UE may receive an RRC configuration (e.g., PDSCH-Config and PUCCH-Config) including a PDSCH reception scheme and a PUCCH transmission scheme from the BS. The UE may receive a DL-SCH (e.g., transport block) through an SPS PDSCH or dynamically scheduled PDSCH and transmit a HARQ-ACK response for the DL-SCH. The UE may receive, from the BS, L1 signaling (e.g., DCI) indicating to retransmit a previous HARQ-ACK codebook (e.g., a first HARQ-ACK codebook) that the UE transmitted or would transmit according to some implementations of the present disclosure (S 1101). Upon receipt of the L1 signaling, the UE may reconstruct a HARQ-ACK codebook according to some implementations of the present disclosure based on a previous HARQ-ACK response transmission (e.g., transmission of the first HARQ-ACK codebook) indicated by the L1 signaling (S1103), and transmit the reconstructed HARQ-ACK codebook (e.g., a second HARQ-ACK codebook) in a UL resource explicitly or implicitly indicated by the L1 signaling (S1105).

FIG. 12 illustrates a BS operation flow according to some implementations of the present disclosure.

The BS may perform an RRC configuration including a PDSCH reception scheme and a PUCCH transmission scheme for the UE. The BS may transmit a DL-SCH (e.g., transport block) to the UE through an SPS PDSCH or dynamically scheduled PDSCH and receive a HARQ-ACK response for the DL-SCH. According to some implementations of the present disclosure, the BS may transmit, to the UE, L1 signaling (e.g., DCI) related to a HARQ-ACK response (e.g., a first HARQ-ACK codebook) that the UE needs to retransmit (S1201). The BS may expect that, upon receipt of the L1 signaling, the UE reconstructs a HARQ-ACK codebook according to some implementations of the present disclosure based on a previous HARQ-ACK response transmission (e.g., transmission of the first HARQ-ACK codebook) indicated by the L1 signaling and transmits the reconstructed HARQ-ACK codebook in a UL resource explicitly or implicitly indicated by the L1 signaling, and may receive the HARQ-ACK codebook. In other words, the BS may receive a second HARQ-ACK codebook related to the first HARQ-ACK codebook in the UL resource explicitly or implicitly indicated by the L1 signaling (S 1205).

The UE and the BS may perform an RRC configuration to determine a slot format through an SPS PDSCH and a TDD operation. The BS may configure one or more SPS PDSCHs (i.e., provide one or more SPS configurations) for the UE, and the UE may receive an SPS PDSCH and perform a PUCCH transmission related to the SPS PDSCH. When the PUCCH transmission of the UE is canceled, the UE may defer the PUCCH transmission, and the BS may indicate new scheduling for a HARQ process related to the PUCCH transmission after the canceled PUCCH resource. In some implementations, the UE may receive a plurality of schedulings for one HARQ process before HARQ-ACK responses, and perform a HARQ-ACK PUCCH transmission in which the HARQ-ACK responses are multiplexed. This is done to operate an SPS PDSCH with a short periodicity using a small number of HARQ processes.

The UE and the BS may perform an RRC configuration for PDSCH reception/transmission and PUCCH reception/transmission. The BS may schedule an SPS PDSCH or PDSCH for the UE, and the UE may receive the (semi-statically or dynamically) scheduled PDSCH and transmit a HARQ-ACK response related to the scheduled PDSCH. The BS may transmit, to the UE, L1 signaling (e.g., DCI) requesting that the UE retransmit a HARQ-ACK response, that is needed to be retransmitted, or a UL transmission including the HARQ response, according to some implementations of the present disclosure. Upon receipt of the L1 signaling, the UE may reconstruct a HARQ-ACK codebook based on a previous HARQ-ACK response transmission indicated by the L1 signaling in a method proposed according to some implementations of the present disclosure, and transmit the reconstructed HARQ-ACK codebook in a UL resource indicated explicitly or implicitly by the L1 signaling. The BS may receive the HARQ-ACK response retransmitted by the UE and, when needed, update the status of HARQ process(es) according to the HARQ-ACK response.

Some of the following methods according to implementations of the present disclosure may be selectively applied. Alternatively, each method may be applied independently without being combined with other methods. Alternatively, one or more methods may be applied in combination or in conjunction with each other. Some terms, symbols, sequences, and so on as used herein may be replaced with other terms, symbols, sequences, and so on.

### implementation 1> One-shot triggering of HARQ-ACK/HARQ-ACK codebook/HARQ-ACK PUCCH

The UE may receive, from the BS, DCI X that explicitly or implicitly indicate a previous scheduled PUCCH or PDSCH, and retransmit the PUCCH indicated by the DCI X, a HARQ-ACK codebook included in the PUCCH, or a HARQ-ACK response corresponding to the PDSCH. Hereinafter, for ease of description, the PUCCH which the UE transmitted or would transmit before the reception of the DCI X and which is indicated by the DCI is referred to as a previous PUCCH, and a PUCCH transmitted based on the DCI X and the previous PUCCH is referred to as a new PUCCH.

In some implementations, upon receipt of the DCI X indicating the retransmission, the UE may perform at least one of the following operations.
> The UE may retransmit the PUCCH that was scheduled to be transmitted at a previous time (i.e., the previous PUCCH).
   >> UCI other than a HARQ-ACK included in the previous PUCCH may be excluded.
   >> For an SR and CSI, values re-generated based on a new PUCCH transmission time may be transmitted.
   >> HARQ-ACK information included in the new PUCCH may be the same as a HARQ-ACK codebook generated for the previous PUCCH transmission. For example, the HARQ-ACK information included in the new PUCCH may be HARQ-ACK information generated based on the assumption of a situation in which the corresponding PUCCH is transmitted at a previous scheduled time.
   >> The previous PUCCH may be limited to a PUCCH canceled by a semi-statically configured transmission direction.
> Alternatively, the UE may retransmit only the HARQ-ACK codebook included in the PUCCH/PUSCH (i.e., the previous PUCCH/PUSCH) that was scheduled to be transmitted at the previous time.
   >> The HARQ-ACK information included in the new PUCCH may be the same as the HARQ-ACK codebook generated for the previous PUCCH transmission. For example, the HARQ-ACK information included in the new PUCCH may be the HARQ-ACK information generated based on the assumption of the situation in which the corresponding PUCCH is transmitted at the previous scheduled time.
   >> The previous PUCCH/PUSCH may be limited to a PUCCH/PUSCH canceled by a semi-statically configured transmission direction.
> Alternatively, the UE may retransmit a HARQ-ACK bit indicating a current status of a HARQ process in which a PDSCH was received before the reception of the DCI X or a HARQ-ACK response was transmitted before the reception of the DCI X.
   >> The PDSCH may be limited to an SPS PDSCH. Alternatively, the PDSCH may be limited to an SPS PDSCH canceled by a semi-statically configured transmission direction.

To indicate the previous scheduled PUCCH or the HARQ-ACK codebook included in the previous scheduled PUCCH or the HARQ-ACK response corresponding to the previous scheduled PDSCH, which will be transmitted in the retransmission, by the DCI X indicating the retransmission, at least one of the following methods may be considered.
> Method 1_1: The following methods may be considered to indicate the previous scheduled PUCCH or the HARQ-ACK codebook included in the previous scheduled PUCCH.
   >> Method 1_1-1: The DCI X indicates a previous dynamically scheduled PDSCH. To indicate the PDSCH, Method 1_2 may be used in some implementations. The UE may determine that a PUCCH indicated by DCI that scheduled the PDSCH or a HARQ-ACK codebook included in the indicated PUCCH is the previous scheduled PUCCH indicated by the DCI X or the HARQ-ACK codebook included in the previous scheduled PUCCH.
   >> Method 1_1-2: The DCI X indicates a previous dynamically scheduled PDSCH. To indicate the PDSCH, Method 1_3 may be used in some implementations. The UE may determine that a PUCCH including a HARQ-ACK corresponding to the PDSCH or a HARQ-ACK codebook including the HARQ-ACK corresponding to the PDSCH is the previous scheduled PUCCH indicated by the DCI X or the HARQ-ACK codebook included in the previous scheduled PUCCH.
   >> Method 1_1-3: The DCI X indicates a UL slot at a previous position. The UL slot may be indicated by a slot offset. For example, the difference between the slot index of a slot in which a PDCCH carrying the DCI X is located and the slot index of a UL slot that the DCI X intends to indicate may be indicated to the UE. The UE may determine that a previous HARQ-ACK PUCCH scheduled in the indicated UL slot or a HARQ-ACK codebook included in the PUCCH is the previous scheduled PUCCH indicated by the DCI X or the HARQ-ACK codebook included in the previous scheduled PUCCH.
> Method 1_2: The following methods may be considered to indicate the previous scheduled PDSCH.
   >> Method 1_2-1: The DCI X indicates a DL slot at a previous position. The DL slot may be indicated by a slot offset. For example, the difference between the slot index of the slot in which the PDCCH carrying the DCI X is located and the slot index of the DL slot that the DCI X intends to indicate may be indicated to the UE. The UE may determine that a PDSCH scheduled in the indicated DL slot is the previous scheduled PDSCH.
   >> Method 1_2-2: The DCI X indicates a HARQ process ID. To indicate the HARQ process ID, the DCI X may use an existing HARQ process number field or include a DCI field separate from the existing HARQ process number field. The UE may determine that the last of PDSCHs using the indicated HARQ process ID is the previous scheduled PDSCH indicated by the DCI X. Alternatively, the UE may determine that the last of PDSCHs for which the corresponding PUCCH transmission has been canceled among the PDSCHs using the indicated HARQ process ID is the previous scheduled PDSCH indicated by the DCI X. In some implementations, the PDSCH of Method 1_2-2 may be limited to an SPS PDSCH.

In some implementations, DCI format 1_0, DCI format 1_1, or DCI format 1_2 used in general DL scheduling may be reused to deliver the DCI X indicating the retransmission. In this case, at least one of the following methods may be used to distinguish DL scheduling DCI from DCI indicating a retransmission.
> The DL scheduling DCI and the DCI indicating a retransmission may use different RNTIs for CRC scrambling of the DCI.
> A certain field included in the DCI may indicate a retransmission of a HARQ-ACK response. The field may be a new field added to DCI format 1_0, DCI format 1_1, or DCI format 1_2 used in NR Release 16 and indicate whether to retransmit the HARQ-ACK response. For example, the UE may interpret the DCI field as follows according to the value of the DCI field.
   >> '0': no triggered HARQ-ACK retransmission
   >> '1': trigger PUCCH retransmission
> A certain field included in the DCI may indicate whether a retransmission of a HARQ-ACK response and DL-SCH scheduling are to be performed. The field may be a new field added to DCI format 1_0, DCI format 1_1, or DCI format 1_2 used in NR Release 16, and indicate whether to retransmit the HARQ-ACK response. For example, the UE may interpret the field as follows according to the value of the field.
   >> '0' or '00': DL-SCH scheduling DCI (i.e. no triggered HARQ-ACK retransmission)
   >> '1' or '01': HARQ-ACK retransmission DCI, or DL-SCH scheduling + HARQ-ACK retransmission DCI
   >>'10' or '11': DL-SCH scheduling + HARQ-ACK retransmission DCI
   >> For example, when one bit is used, '0' may indicate DL-SCH scheduling DCI, and '1' may indicate HAQR-ACK retransmission DCI. When two bits are used, '00' may indicate DL-SCH scheduling DCI, '01' may indicate HARQ-ACK retransmission DCI, and '10' or '11' may indicate DL-SCH scheduling + HARQ-ACK retransmission DCI. That is, depending on the value of the field, the UE may determine whether the DCI schedules a DL-SCH and whether the DCI triggers a HARQ-ACK retransmission.
> The HARQ-ACK retransmission may be triggered, when configured UL scheduling is canceled due to a transmission direction within previous X symbols/slots from the reception time of the DCI. That is, when the configured UL scheduling is canceled due to the transmission direction within the previous X symbols/slots from the DCI reception time, the UE may determine that the DCI is HARQ-ACK retransmission DCI
   >> Herein, X may be a predefined value (e.g., 1 or 2) or a value determined by L1 signaling or higher-layer signaling from the BS.
   >> The transmission direction may be the transmission direction of each symbol (e.g., DL symbol, UL symbol, or flexible symbol) configured or indicated semi-statically by a tdd-UL-DL-ConfigurationCommon or tdd-UL-DL-ConfigurationDedicated message or dynamically by DCI format 2_0. In some implementations of the present disclosure, only semi-statically configured transmission directions may be considered.
   >> In some implementations, the configured UL scheduling may include a PUCCH or PUSCH including a HARQ-ACK.
   >> In some implementations, the configured UL scheduling may be limited to a HARQ-ACK PUCCH corresponding to an SPS PDSCH configured by an SPS configuration.

The UL resource in which the retransmission is performed may be a PUCCH resource determined by the value of a PUCCH resource indicator (PRI) in the DCI. When the DCI schedules the retransmission and a DL-SCH simultaneously, the retransmission may be performed in a PUCCH resource indicated in advance by higher-layer signaling from the BS or in a PUCCH resource determined based on a PUCCH resource or PUSCH resource set indicated by a separate field added in the DCI to indicate a PUCCH resource to be used for retransmission.

In some implementations, the UL resource in which the retransmission is performed may be the same radio resource as a PUCCH radio resource used for the previous scheduled PUCCH transmission. For example, even if the total UCI payload of the retransmission is changed from that of the previous transmission, the UE may select the same radio resource as a radio resource used for the previous transmission, for the retransmission. Alternatively, the UE may use only the same PRI or PUCCH resource set as a PRI or PUCCH resource set used in the previous scheduled PUCCH transmission, for the retransmission and select a new time-frequency radio resource according to the size of actually transmitted UCI payload. The UE may perform the retransmission in the selected PUCCH resource.

### <Implementation 2> Explicit indication of codebook type for HARQ-ACK retransmission

When the UE is allowed to be indicated through DCI to retransmit a previous transmitted HARQ-ACK PUCCH or HARQ-ACK codebook in the same manner as in Implementation 1, the type of a HARQ-ACK codebook to be retransmitted may be explicitly indicated to the UE, and the UE may reconstruct/re-generate a HARQ-ACK codebook according to the indicated HARQ-ACK codebook type.

In some implementations, the types of HARQ-ACK codebooks may refer to types based on HARQ-ACK codebook configuration methods defined in 3GPP TS 38.213. For example, the following HARQ-ACK codebook types may be available.
> Fallback HARQ-ACK codebook. For example, Type-1 HARQ-ACK codebook only for an SPS PDSCH release indicated by DCI format 1_0 with a counter DAI field value of 1, or Type-1 HARQ-ACK codebook only for a PDSCH reception scheduled by DCI format 1_0 with a counter DAI field value of 1 on a PCell.
> Type-1 HARQ-ACK codebook.
> Type-1 HARQ-ACK codebook for SPS PDSCH reception(s) only.
> Type-2 HARQ-ACK codebook.
> Type-2 HARQ-ACK codebook grouping and HARQ-ACK retransmission.
> Type-3 HARQ-ACK codebook.

To determine the type of the retransmitted HARQ-ACK codebook, one of the HARQ-ACK codebook types listed above may be configured by an RRC parameter from the BS or predefined for the UE. Alternatively, a HARQ-ACK codebook type indicator indicating a HARQ-ACK codebook type to be used may be included in DCI. The HARQ-ACK codebook type indicator may be one or two bits and indicate a HARQ-ACK codebook type to be used for a HARQ-ACK retransmission. For example, the HARQ-ACK codebook indicator and the HARQ-ACK codebook types may be mapped according to the following tables.

**Table 8**

| HARQ-ACK codebook type indicator | Codebook type |
|---|---|
| '0' | Fallback HARQ-ACK codebook |
| '1' | Type-1 codebook or current codebook |

**Table 9**

| HARQ-ACK codebook type indicator | Codebook type |
|---|---|
| '00' | Fallback HARQ-ACK codebook |
| '01' | Type-1 codebook |
| '10' | Type-2 codebook |
| '11' | Type-3 codebook |

In some implementations of the present disclosure, a value indicating no HARQ-ACK PUCCH retransmission, for example, "No trigger" may be mapped as one of the codebook types mapped to the values of the HARQ-ACK codebook type indicator. For example, in the case where a value of '00' of the HARQ-ACK codebook type indicator is mapped to "No trigger", upon receipt of DCI with a HARQ-ACK codebook type indicator value of '00', the UE may determine that the DCI does not indicate a HARQ-ACK PUCCH retransmission. Additionally, the UE may determine that the DCI is general scheduling DCI.

In some implementations of the present disclosure, a value indicating a current configured codebook type, for example, "Current codebook" may be mapped as one of the codebook types mapped to the values of the HARQ-ACK codebook type indicator. For example, in the case where a value of '00' of the HARQ-ACK codebook type indicator is mapped to "Current codebook", upon receipt of DCI with a HARQ-ACK codebook type indicator value of '00', the UE may use the current configured codebook type (for a corresponding priority), when performing a HARQ-ACK PUCCH retransmission based on the DCI.

In another example, the UE may expect HARQ-ACK PUCCH retransmission DCI to always indicate the same codebook as a codebook for the previous scheduled PUCCH. Indicating the same codebook as the codebook of the previous scheduled PUCCH to the UE by the HARQ-ACK PUCCH retransmission DCI may be used to identify whether the scheduled DCI has been successfully received. For example, when the UE receives retransmission DCI indicating a different codebook, the UE may estimate that scheduling DCI has not been successfully received or that there may be scheduling DCI that was not received.

In some implementations of the present disclosure, the following may be additionally considered.
> In a situation where Type-1 codebook-based HARQ-ACK feedback is configured for the UE, when DCI indicates the UE to retransmit a previous HARQ-ACK feedback, the DCI may indicate whether to configure the previous HARQ-ACK feedback with a fallback codebook (including only a HARQ-ACK corresponding to DCI/PDSCH corresponding DAI = 1 of Pcell or an SPS PDSCH) or with a full payload codebook (including HARQ-ACKs corresponding to all rows/entries of the TDRA table and all K1 values).
> In a situation where Type-2 codebook-based HARQ-ACK feedback is configured for the UE, when DCI instructs the UE to retransmit a previous HARQ-ACK feedback, the DCI may indicate total-DAI information/value for the previous HARQ-ACK feedback.
> The UE may operate to configure/transmit the previous feedback based on the information indicated by the DCI.

### <Implementation 3> Avoiding out-of-order due to re-transmitted HARQ-ACK

When the UE retransmits a PUCCH, the UE may need to consider the decoding and feedback processes of other PDSCHs. In order to keep the implementation complexity of the UE at or below a certain level, the UE may form a pipeline of a reception procedure by sequentially performing each process required for PDSCH reception for each PDSCH. In this case, it is necessary to consider a UE operation of always transmitting a HARQ-ACK for an earlier received PDSCH earlier than a HARQ-ACK for a later received PDSCH or a UE operation of not receiving another PDSCH before transmitting a PUCCH in the same HARQ process.

In some scenarios, an out-of-order transmission between a PDSCH reception and a HARQ-ACK transmission for one HARQ process is not allowed for the UE. For example, the UE is not expected to receive another PDSCH for a given HARQ process until after the end of an expected HARQ-ACK transmission for the HARQ process, and the transmission timing of a HARQ-ACK PUCCH for a PDSCH using a certain HARQ process is given by section 9.2.3 of 3GPP TS 38.213. In another example, in a given scheduled cell, the UE is not expected to perform a first PDSCH reception and a second PDSCH reception starting later than the first PDSCH reception together with a HARQ-ACK transmission for the second PDSCH reception, for which a resource ending before the start of a resource allocated for a HARQ-ACK transmission for the first PDSCH reception are allocated. Herein, the two resources are in different slots for the related HARQ-ACK transmissions. Each of the slots includes N^{slot}_{symb} symbols or, when provided, includes as many symbols as indicated by *subslotLengthForPUCCH-r16.* HARQ-ACKs for the two PDSCHs are related to a HARQ-ACK codebook of the same priority. In another example, when the ARQ-ACK transmissions for the first PDSCH reception and the second PDSCH reception are related to HARQ-ACK codebooks of different priorities in a given scheduled cell, the UE is not expected to perform the first PDSCH reception and the second PDSCH reception starting later than the first PDSCH reception together with the HARQ-ACK transmission for the second PDSCH reception, for which a resource ending before the start of a resource allocated for the HARQ-ACK transmission for the first PDSCH reception are allocated. In another example, when for any two HARQ process IDs in a scheduled cell, the UE is scheduled to start to receive a first PDSCH (for a first HARQ process ID) starting in symbol j by a PDCCH ending in symbol i, the UE is not expected to be scheduled to receive a PDSCH (for a second HARQ process ID) starting earlier than the end of the first PDSCH, which has a PDCCH ending later than symbol i.

To solve this problem, the following UE operation may be additionally considered for a PUCCH that may be retransmitted, in consideration of the above-described UE operations.

In a PUCCH retransmission procedure, when the UE retransmits a PUCCH for an earlier received first PDSCH, the starting symbol and ending symbol of the PUCCH may be changed. Herein, the starting symbol of the retransmission PUCCH may be indicated as being after the ending symbol of a HARQ-ACK PUCCH for a second PDSCH received later than the related PDSCH, or the ending symbol of the retransmission PUCCH may be determined to be after the starting symbol of another SPS PDSCH period related to the same HARQ process. In this case, some PDSCH assignments may not be received according to the UE operation(s) described above, which may act as an additional burden and scheduling restriction on the BS.

For example, the UE is not expected to receive another PDSCH for a given HARQ process until after the end of an expected transmission of a HARQ-ACK for the HARQ process, and the transmission timing of a HARQ-ACK PUCCH for a PDSCH using a certain HARQ process is given by section 9.2.3 of 3GPP TS 38.213. In a given scheduled cell, the UE does not expect to perform a first PDSCH reception and a second PDSCH reception starting later than the first PDSCH reception along with a HARQ-ACK transmission for the second PDSCH reception, which is allocated to be performed in another resource ending before the start of a resource allocated for a HARQ-ACK transmission for the first PDSCH reception. The two resources are in different slots for the related HARQ-ACK transmissions. Each slot includes N^{slot}_{symb} symbols or, when provided, as many of symbols as indicated by *subslotLengthForPUCCH-r16*, and HARQ-ACKs for the two PDSCHs are associated with a HARQ-ACK codebook of the same priority. When the ARQ-ACK transmissions for the first PDSCH reception and the second PDSCH reception are associated with HARQ-ACK codebooks of different priorities in the given scheduled cell, the UE does not expect to perform the first PDSCH reception and the second PDSCH reception starting later than the first PDSCH reception along with the HARQ-ACK transmission for the second PDSCH reception, which is allocated to be performed in another resource ending before the start of a resource allocated for the HARQ-ACK transmission for the first PDSCH reception.

In some implementations of the present disclosure, however, for more flexible HARQ-ACK retransmissions, when the UE is allowed to receive DCI and perform a HARQ-ACK retransmission based on the DCI in a similar manner to Implementation 1, exceptionally 1) even if a pre-scheduled HARQ-ACK transmission is allowed to be retransmitted, a PDSCH retransmission/reception for the same HARQ process ID and a corresponding HARQ-ACK transmission may be performed before the retransmission of the pre-scheduled HARQ-ACK transmission, and 2) the predefined out-of-order HARQ restriction for a single HARQ process ID is relieved such that it is determined based on a HARQ-ACK transmission time indicated/configured before the retransmission (regardless of whether the HARQ-ACK transmission is performed at an actual corresponding time).

For example, for a UE capable of performing a HARQ-ACK retransmission or for a retransmittable HARQ-ACK response (and a corresponding HARQ process ID), there are exceptions: 1) before a retransmission of a certain A/N feedback, a PDSCH retransmission/reception and a corresponding A/N feedback transmission for the same HARQ process ID is allowed, and 2) the restriction is relieved such that whether to allow an out-of-order HARQ for the same HARQ process ID is determined based on a previously indicated/configured A/N transmission time (regardless of whether an actual A/N transmission is performed).

### <Implementation 4> Priority handling for HARQ-ACK retransmission

In some scenarios (e.g., NR Release 16), HARQ-ACK codebooks may be configured by priority. Basically, a HARQ-ACK codebook may be transmitted in a radio resource with the same priority as the priority index of the HARQ-ACK codebook. The UE may perform UL multiplexing between radio resources with the same priority, whereas the UE may prioritize radio resources with different priorities to cancel a low-priority transmission and perform a transmission in a high-priority radio resource. To indicate the priority of a HARQ-ACK codebook, a priority indicator may be included in DCI that schedules a PDSCH or an SPS PDSCH configuration. When the UE performs a retransmission of a pre-scheduled PUCCH according to Implementation 1 or in a similar manner to Implementation 1, the UE needs to consider the priority of pre-scheduled PUCCH A and the priority of PUCCH B for retransmission of PUCCH A based on DCI X. Considering the priority of PUCCH A and the priority indicator of the DCI X, at least one of the following methods may be considered to determine the priority of PUCCH B.

### <Implementation 4-1> Priority handling for triggering DCI

In Implementation 4, when a PUCCH retransmission is performed based on DCI X including a priority indicator, the priority indicator of the DCI X may be considered in selecting PUCCH A for PUCCH retransmission.

In some implementations, the retransmission may be limited to a HARQ-ACK codebook corresponding to the priority indicator of DCI X. For example, in Implementation 1 or similarly, in the case where the UE selects in a UL slot indicated by DCI X and retransmits it, when the priority indicator of the DCI X indicates a lower priority (e.g., priority index 0), the UE may select only a first HARQ-ACK codebook, and when the priority indicator of the DCI X indicates a higher priority (e.g., priority index 1), the UE may select only a second HARQ-ACK codebook. When the BS intends to instruct the UE by DCI X to retransmit the first HARQ-ACK codebook that the UE transmitted or would transmit in a UL slot, the BS may indicate the lower priority by the DCI X and the higher priority by the DCI X.

In some implementations, in the case where the UE selects in a UL slot indicated by DCI X and retransmits it according to Implementation 1 or in a similar manner to Implementation 1, when the priority indicator of the DCI X indicates the lower priority (e.g., priority index 0), the UE may select the first HARQ-ACK codebook, and when the priority indicator of the DCI X indicates the higher priority (e.g., priority index 1), the UE may select the first HARQ-ACK codebook and/or the second HARQ-ACK codebook. This is done to selectively retransmit only a specific HARQ-ACK codebook in a situation where HARQ-ACK transmissions with different priorities are performed in a single UL slot, such as an inter-priority multiplexing situation.

In some implementations, the UE may apply a slot offset of Implementation 1 in consideration of the slot length (e.g., 2, 7, or 14 symbols) of a PUCCH which may carry a HARQ-ACK codebook corresponding to the priority indicator of the DCI X. For example, when the priority indicator of the DCI X indicates the higher priority (e.g., priority index 1) and a corresponding HARQ-ACK codebook uses a slot length of 7 symbols, the slot offset is applied in units of 7 symbols. For example, slot offset 2 may mean 14 symbols. In Implementation 4-1, a situation in which NR Rel-17 intra-UE multiplexing, that is, inter-priority multiplexing is performed in a UL slot indicated by DCI X may be considered more specifically. For example, in a system complying to the NR Rel-17 standard, when PUSCHs/PUCCHs with different priorities overlap in time in one slot, the UE may select a PUCCH or PUSCH to be transmitted by first performing UL multiplexing for each priority and then, when needed, performing inter-priority UL multiplexing after the UL multiplexing for each priority. In this case, the first HARQ-ACK codebook and the second HARQ-ACK codebook may be transmitted on one PUCCH or PUSCH in one UL slot, and in the process of multiplexing into one PUCCH or PUSCH, the first HARQ-ACK codebook may be dropped, and only the second HARQ-ACK codebook with the higher priority may be transmitted. In this case, a PUCCH retransmission may be performed in a corresponding UL slot in consideration of the priority indicator of DCI X in at least one of the following methods.
> Method 4-1_1: A HARQ-ACK codebook and a priority before intra-UE multiplexing may be considered. This may amount to retransmitting a PUCCH and a HARQ-ACK codebook obtained after UL multiplexing for each priority. For example, when the priority indicator of the DCI X indicates the lower priority (e.g., priority index 0), the UE may select only the first HARQ-ACK codebook (scheduled to be transmitted on a lower-priority PUCCH), and when the priority indicator of the DCI X indicates the higher priority (e.g., priority index 1), the UE may select only the second HARQ-ACK codebook (scheduled to be transmitted on a higher-priority PUCCH).
> Method 4-1_2: A HARQ-ACK codebook and a priority after intra-UE multiplexing may be considered. In other words, a PUCCH/PUSCH in which a lower-priority HARQ-ACK and a higher-priority HARQ-ACK or higher-priority HARQ-ACKs are multiplexed may be determined as a higher-priority PUCCH/PUSCH, and a HARQ-ACK codebook included in the PUCCH/PUSCH may be determined to have the same priority. A PUCCH/PUSCH in which lower-priority HARQ-ACKs without a higher-priority HARQ-ACK are multiplexed may be determined as a lower-priority PUCCH/PUSCH, and a HARQ-ACK codebook included in the PUCCH/PUSCH may be determined to have the same priority. In this case, when the priority indicator of the DCI X indicates the higher priority (e.g., priority index 1), the UE may select and retransmit the second HARQ-ACK codebook, that is, a HARQ-ACK codebook included in a PUCCH with a HARQ-ACK to be transmitted on a higher-priority PUCCH, and when the priority indicator of the DCI X indicates the lower priority (e.g., priority index 0), the UE may select and retransmit a HARQ-ACK codebook included in a PUCCH that does not include a HARQ-ACK to be transmitted on the higher-priority PUCCH.
> A PUCCH transmission including a lower-priority HARQ-ACK may be dropped during intra-UE multiplexing and thus not be transmitted. This operation may be further considered when the above methods are used. For example, when one of the above methods is used, the UE may not retransmit a HARQ-ACK codebook transmission dropped during intra-UE multiplexing. For example, an indication of the BS to retransmit a HARQ-ACK codebook transmission dropped during intra-UE multiplexing may not be expected or may be ignored. This prevents the retransmission for a HARQ-ACK codebook that the UE does not generate, thereby ensuring that the retransmission process is limited to a HARQ-ACK codebook pre-stored in the UE. This may be useful for reducing the implementation complexity of the UE.

### <Implementation 4-2> Priority determination of HARQ-ACK retransmission

In performing Implementation 4, when a PUCCH retransmission is performed based on DCI X that may include a priority indicator, at least one of the following methods may be used to determine the priority of a retransmission PUCCH, PUCCH B of a selected PUCCH, PUCCH A.
> Method 4-2_1: It is assumed that PUCCH B has the same priority as PUCCH A or a retransmitted HARQ-ACK codebook.
   >> When a plurality of HARQ-ACK codebooks are retransmitted, the highest of the priorities of the retransmitted HARQ-ACK codebooks may be applied as the priority of PUCCH B.
> Method 4-2_2: When DCI X includes a priority indicator, it is assumed that PUCCH B has a priority corresponding to the priority indicator of the DCI X.
   >> The priority indicator may be a separate priority indicator indicating the priority of PUCCH B. For example, when the DCI X simultaneously performs scheduling of both PDSCH and a retransmission of PUCCH A, the DCI X may simultaneously and separately include a priority indicator for the retransmission of PUCCH A and a priority indicator for a HARQ-ACK transmission corresponding to the PDSCH scheduling.

In determining the priority of PUCCH B, the priority of PUCCH B may be limited by the priority of PUCCH A. For example, at least one of the following methods may be considered.
> The UE does not expect the priority of PUCCH A and the priority of PUCCH B to be different. That is, the priority of PUCCH A and the priority of PUCCH B are always the same. This may provide consistency in UE behavior by keeping the index of a HARQ-ACK codebook and the priority of a channel carrying it always the same during retransmission, and reduce ambiguity in the choice of RRC parameters during PUCCH resource selection, considering that there are separate RRC parameters for each priority.
> Alternatively, the UE may not expect to retransmit PUCCH A with a (relatively) high priority or HARQ-ACK information included in PUCCH A through PUCCH B with a (relatively) low priority. In other words, when the UE retransmits a PUCCH, a radio resource in which the retransmission is performed may always be limited to a radio resource of the same priority as or a higher priority than that of the PUCCH. This prevents higher-priority HARQ-ACK information from being included in lower-priority PUCCH radio resources during inter-priority multiplexing, thereby preventing the higher-priority HARQ-ACK information from being canceled or dropped.
> Alternatively, the UE may not expect to retransmit PUCCH A with a (relatively) low priority or HARQ-ACK information included in PUCCH A through PUCCH B with a (relatively) high priority. In other words, when the UE retransmits a PUCCH, a radio resource in which the retransmission is performed may always be limited to radio resources of the same priority as or a lower priority than that of the PUCCH. This ensures that a retransmission has the same priority as or a lower priority than a retransmitted HARQ-ACK, thereby preventing an initial transmission of a HARQ-ACK other than the retransmission from being canceled or dropped.

### <Implementation 5> One-shot HARQ-ACK retransmission and SPS HARQ-ACK deferral

For a HARQ-ACK for a SPS PDSCH, which is not allowed to be transmitted in a TDD environment and to address a long latency issue that may occur in the TDD environment, HARQ-ACK deferral and PUCCH carrier switching are discussed. When HARQ-ACK deferral is performed, the UE may defer a HARQ-ACK transmission from an initially indicated/configured HARQ-ACK transmission slot (hereinafter, referred to as an initial slot) to a later slot (hereinafter, referred to as a target slot).

Using Implementation 1, the UE may receive, from the BS, DCI that explicitly or implicitly indicates a previous scheduled PUCCH or PDSCH and perform a one-shot HARQ-ACK retransmission for retransmitting a PUCCH of UL slot X indicated by the DCI or a HARQ-ACK codebook included in the PUCCH. However, when the HARQ-ACK transmission in the UL slot X is deferred to another slot, slot Y by the HARQ-ACK deferral operation described above, or when a HARQ-ACK PUCCH transmission in another slot Z is deferred to slot X, HARQ-ACK information transmitted in the UL slot X may be changed. Further, this HARQ-ACK deferral operation may be performed differently by L1 signaling and/or higher-layer signaling from the BS. When the UE fails to receive L1 signaling related to HARQ-ACK deferral, ambiguity may occur in a one-shot HARQ-ACK retransmission as well as in a HARQ-ACK deferral operation between the UE and the BS.

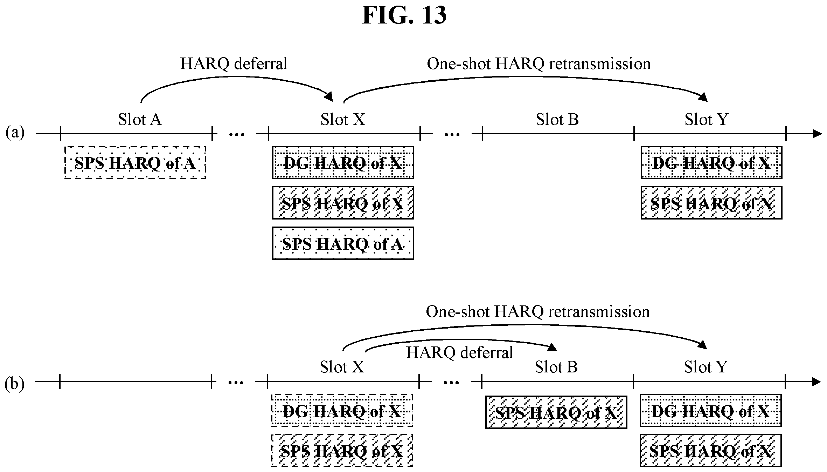

FIGS. 13 to 15 illustrate examples in which HARQ deferral (i.e., HARQ-ACK deferral) and a one-shot HARQ-ACK retransmission are performed together according to some implementations of the present disclosure. In FIGS. 13 to 15, SPS HARQ of n refers to a HARQ-ACK for an SPS PDSCH, which is scheduled to be transmitted in slot n, and DG HARQ of n refers to a HARQ-ACK for a PDSCH scheduled by DCI, which is scheduled to be transmitted in slot n. In the examples of FIGS. 13 to 15, it is assumed that only a HARQ-ACK for a SPS PDSCH is subject to HARQ deferral.

To address this issue, at least one of the following methods may be considered.
> Method 5_1: When a one-shot HARQ-ACK retransmission is performed to retransmit a HARQ-ACK codebook of UL slot X, the UE and BS may perform the one-time HARQ-ACK retransmission, assuming a PUCCH and a HARQ-ACK codebook that would be if no HARQ-ACK deferral had occurred to/from UL slot X.

According to Method 5_1, the HARQ-ACK deferral and the one-shot HARQ-ACK retransmission are performed independently. Since it is determined whether HARQ deferral is performed based on a symbol direction determined based on scheduling DCI or SFI DCI, there is a risk that the UE and the BS may determine differently whether HARQ deferral is performed, when the UE fails to receive the scheduling DCI or SFI DCI from the BS. According to Method 5_1, a HARQ-ACK codebook to be transmitted in slot Y may be determined without considering the impact of HARQ deferral, which eliminates ambiguity involved in DCI transmission/reception related to HARQ deferral during a HARQ-ACK retransmission.

Referring to FIG. 13(a), when the transmission of SPS HARQ of A that the UE would perform in slot A overlaps in time with a DL symbol, the transmission of SPS HARQ of A may be deferred to slot X, which is the earliest slot available for the transmission of SPS HARQ of A, by HARQ deferral. In the example of FIG. 13(a), the UE may transmit a HARQ-ACK codebook (hereinafter, referred to as a first HARQ-ACK codebook) including SPS HARQ of A deferred from slot A to slot X together with DG HARQ of X and SPS HARQ of X which are scheduled to be transmitted in slot X. Referring to FIG. 13(a), the UE may be requested by DCI to retransmit DG HARQ of X, SPS HARQ of X, and SPS HARQ of A transmitted in slot X in slot Y. In this case, according to some implementations of Method 5_1, the UE may transmit, in slot Y, a HARQ-ACK codebook including DG HARQ of X and SPS HARQ of X that would have been transmitted in slot X without the HARQ-ACK deferral to slot X, among DG HARQ of X, SPS HARQ of X, and SPS HARQ of A transmitted in slot X, without including SPS HARQ SPS of A in the HARQ-ACK codebook, as illustrated in FIG. 13(a).

Referring to FIG. 13(b), when a transmission of a HARQ-ACK codebook including DG HARQ of X and SPS HARQ of X that the UE would transmit in slot X overlaps in time with a DL symbol, a transmission of SPS PDSCH of X may be deferred to slot B, which is the earliest slot available for the transmission of SPS PDSCH of X. In the example of FIG. 13(b), the UE may be requested by DCI to retransmit, in slot Y, the HARQ-ACK codebook including DG HARQ of X and SPS PDSCH of X that the UE would transmit in slot X. In this case, according to some implementations of Method 5_1, the UE may transmit, in slot Y, the HARQ-ACK codebook including DG HARQ of X and SPS HARQ of X that the UE would have transmitted in slot X without the HARQ-ACK deferral, out of DG HARQ of X and SPS HARQ of X that the UE would transmit in slot X, as illustrated in FIG. 13(b).
> Method 5_2: In the case of a one-shot HARQ-ACK retransmission, when transmission of a SPS HARQ-ACK PUCCH is deferred from UL slot X to another slot by HARQ-ACK deferral, the UE and the BS may retransmit HARQ-ACK codebook information except an SPS HARQ-ACK codebook in UL slot X. In addition, the UE and BS may perform a one-shot HARQ-ACK retransmission, assuming a PUCCH and a HARQ-ACK codebook that would be if the HARQ-ACK deferral to UL slot X had not occurred.

According to Method 5_2, a SPS HARQ-ACK of which the transmission is deferred from an earlier slot to slot X or from slot X to a later slot is not included in a HARQ-ACK codebook transmitted in slot Y in response to a HARQ-ACK retransmission request for slot X. Rather than HARQ deferral is semi-statically determined, it may be determined whether to perform HARQ deferral depending on whether the UE receives dynamic scheduling DCI or SFI DCI for a slot within a HARQ-ACK transmission and whether symbols used in the HARQ-ACK transmission include a DL symbol indicated by the dynamic scheduling DCI or the SFI DCI. When HARQ-ACK information to be included in the HARQ-ACK codebook to be transmitted in slot Y in response to the HARQ-ACK retransmission request for slot X depends on HARQ deferral at a time earlier than slot X, the size of the HARQ-ACK codebook to be received by the BS in slot Y may vary depending on whether the UE receives scheduling DCI or SFI DCI for slot X, causing ambiguity between the UE and the BS regarding HARQ-ACK information to be retransmitted. According to Method 5_2, excluding an SPS HARQ-ACK deferred to slot X for which a HARQ-ACK retransmission is requested by HARQ deferral, from a HARQ-ACK codebook transmitted in slot Y may reduce the possibility that the UE and the BS assume different content/sizes of a HARQ-ACK codebook transmitted and received in slot Y. On the other hand, according to Method 5_2, the SPS HARQ-ACK that the UE would transmit in slot X is not included in the HARQ-ACK codebook transmitted in slot Y in response to the HARQ-ACK retransmission request for slot X. The SPS HARQ-ACK of which the transmission is deferred from slot X to another slot by HARQ deferral may be transmitted to the BS in another slot, even though it is not included in the HARQ-ACK codebook transmitted in slot Y in response to the above HARQ-ACK retransmission request. According to Method 5_2, the SPS HARQ-ACK deferred from slot X for which the HARQ-ACK retransmission request is intended to a later slot may be excluded from the retransmission, thereby preventing unnecessary redundant transmission of the same SPS HARQ-ACK to the BS. According to Method 5_2, the size of a HARQ-ACK codebook transmitted in slot Y in response to the HARQ-ACK retransmission request/indication for slot X may be smaller than the size of a HARQ-ACK codebook including the SPS HARQ-ACK deferred to or from slot X.

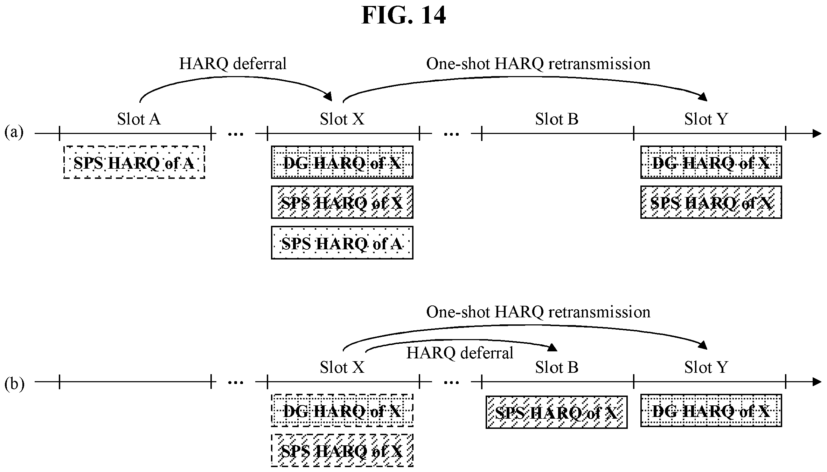

Referring to FIG. 14(a), when a transmission of SPS HARQ of A scheduled to be performed in slot A by the UE overlaps in time with a DL symbol, the transmission of SPS HARQ of A may be deferred to slot X, which is the earliest slot available for the transmission of SPS HARQ of A, by HARQ deferral. In the example of FIG. 14(a), the UE may transmit a HARQ-ACK codebook (hereinafter, referred to as a first HARQ-ACK codebook) including SPS HARQ of A deferred from slot A to slot X together with DG HARQ of X and SPS HARQ of X which are scheduled to be transmitted in slot X. Referring to FIG. 14(a), the UE may be requested by DCI to retransmit DG HARQ of X, SPS HARQ of X, and SPS HARQ of A transmitted in slot X in slot Y. In this case, according to some implementations of Method 5_2, the UE transmits, in slot Y, a HARQ-ACK codebook including DG HARQ of X and SPS HARQ of X except SPS HARQ of A deferred from an earlier slot to slot X among DG HARQ of X, SPS HARQ of X, and SPS HARQ of A transmitted in slot X, and does not include SPS HARQ of A in the HARQ-ACK codebook transmitted in slot Y.

Referring to FIG. 14(b), when a transmission of a HARQ-ACK codebook including DG HARQ of X and SPS HARQ of X scheduled to be transmitted in slot X by the UE overlaps in time with a DL symbol, a transmission of SPS PDSCH of X may be deferred to slot B, which is the earliest slot available for the transmission of SPS PDSCH of X. In the example of FIG. 14(b), the UE may requested by DCI to retransmit, in slot Y, the HARQ-ACK codebook including DG HARQ of X and SPS PDSCH of X scheduled to be transmitted in slot X by the UE. In this case, according to some implementations of Method 5_2, the UE transmits a HARQ-ACK codebook including DG HARQ of X in slot Y, except for SPS HARQ of X scheduled to be transmitted in slot X and then deferred to slot B, without including SPS HARQ of X in the HARQ-ACK codebook transmitted in slot Y, as illustrated in FIG. 14(b).

In the case of a Type-2 HARQ-ACK codebook, SPS HARQ-ACK bit(s) are located separately from the other HARQ-ACK bits in the Type-2 HARQ-ACK codebook, thereby making it easy to exclude an SPS HARQ-ACK deferred to or from slot X from a HARQ-ACK codebook that the UE transmitted or would transmit in slot X. In view of this, in some implementations of Method 5_2, Method 5_2 may be limited to a case of using a Type-2 HARQ-ACK codebook in which an SPS HARQ-ACK codebook is separately configured.
> Method 5_3: In the case where a one-shot HARQ-ACK retransmission is performed, when there is an SPS HARQ-ACK PUCCH deferred to UL slot X by HARQ-ACK deferral, the UE and the BS may retransmit, in slot Y, the deferred SPS HARQ-ACK to be transmitted in UL slot X. The UE and the BS may also perform the one-shot HARQ-ACK retransmission, assuming a PUCCH and a HARQ-ACK codebook that would be if the HARQ-ACK deferral in UL slot X had not occurred. In other words, when the one-shot HARQ-ACK retransmission is performed to retransmit the HARQ-ACK codebook of UL slot X, the UE and the BS may transmit, in slot Y, a HARQ-ACK codebook including all HARQ information that the UE transmitted or would transmit in the UL slot (regardless of the HARQ deferral operation).

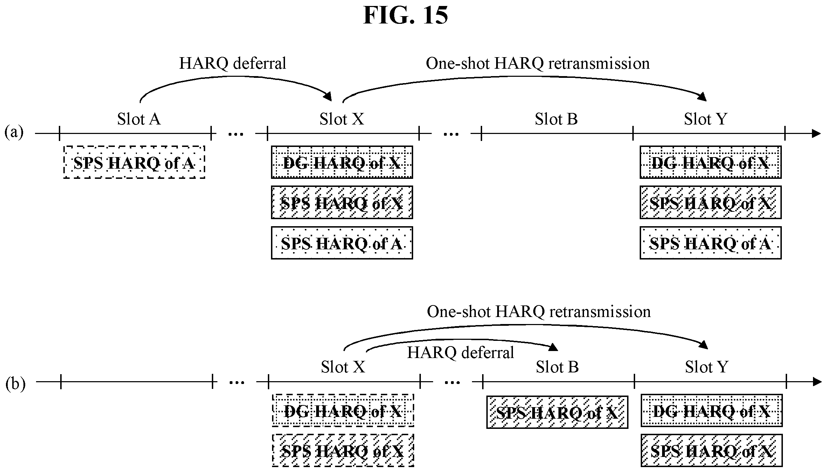

Referring to FIG. 15(a), when a transmission of SPS HARQ of A that the UE would perform in slot A overlaps in time with a DL symbol, the transmission of SPS HARQ of A may be deferred to slot X, which is the earliest slot available for the transmission of SPS HARQ of A, by HARQ deferral. In the example of FIG. 15(a), the UE may transmit SPS HARQ of A deferred from slot A to slot X together with DG HARQ of X and SPS HARQ of X which are scheduled to be transmitted in slot X. Referring to FIG. 15(a), the UE may be requested by DCI to retransmit, in slot Y, DG HARQ of X, SPS HARQ of X, and SPS HARQ of A transmitted or expected to be transmitted in slot X. In this case, according to some implementations of Method 5_3, the UE may transmit, in slot Y, a HARQ-ACK codebook including all of DG HARQ of X, SPS HARQ of X, and SPS HARQ of A that the UE transmitted or would transmit in slot X, as illustrated in FIG. 15(a).

Referring to FIG. 15(b), when a transmission of a HARQ-ACK codebook including DG HARQ of X and SPS HARQ of X that the UE would perform in slot X overlaps in time with a DL symbol, the transmission of SPS PDSCH of A may be deferred to slot B, which is the earliest slot available for the transmission of SPS PDSCH of A. In the example of FIG. 15(b), the UE may be requested by DCI to retransmit, in slot Y, the HARQ-ACK codebook including DG HARQ of X and SPS PDSCH of X that the UE would transmit in slot X. In this case, according to some implementations of Method 5_3, the UE may transmit, in slot Y, the HARQ-ACK codebook including both DG HARQ of X and SPS HARQ of X that the UE transmitted or would transmit in slot X, as illustrated in FIG. 15(b).

According to some implementations of the present disclosure described above, the BS may re-receive a HARQ-ACK response that the UE previously transmitted or would transmit, and explicitly indicate the type of a HARQ-ACK codebook that the UE reconstructs for the HARQ-ACK response. According to some implementations of the present disclosure, ambiguity that may arise from the BS indicating a previous HARQ-ACK response may be eliminated, and information for which a HARQ-ACK codebook retransmission from the UE is needed may be minimized. The system may achieve a desired level of reliability by a HARQ-ACK retransmission in spite of a relatively small amount of resources used for a PUCCH transmission, and avoid an unnecessary PDSCH retransmission that may result from HARQ-ACK loss caused by a failed PUCCH transmission and PUCCH de-prioritization (e.g., PUCCH dropping in inter-priority contention).

The UE may perform operations according to some implementations of the present disclosure in association with transmission of HARQ-ACK information. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

In the UE, the processing device, the computer-readable (non-volatile storage medium, and/or the computer program product, the operations include: deferring a transmission of first HARQ-ACK information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot; determining a first HARQ-ACK codebook including the first HARQ-ACK information and second HARQ-ACK information in the second slot in which a transmission of the second HARQ-ACK information for a PDSCH reception is scheduled based on first downlink control information (DCI); receiving second DCI triggering a retransmission of the first HARQ-ACK codebook; and transmitting a second HARQ-ACK codebook in a third slot later than the second slot, based on the second DCI. The second HARQ-ACK codebook includes the first HARQ-ACK information without the first HARQ-ACK information.

In some implementations, the first HARQ-ACK codebook may include third HARQ-ACK information for a second SPS PDSCH, scheduled to be transmitted in the second slot. The operations may include deferring a transmission of the third HARQ-ACK information to a fourth slot later than the second slot, based on a transmission of the first HARQ-ACK codebook overlapping with a downlink symbol in the second slot. The third HARQ-ACK information may not be included in the second HARQ-ACK codebook, based on the deferral of the transmission of the third HARQ-ACK information from the second slot to the fourth slot.

In some implementations, the first DCI may include information regarding the first slot.

In some implementations, the information regarding the first slot may be a slot offset indicating a difference between the first slot and a slot in which the first DCI is received.

In some implementations, the first DCI may include a priority indicator. The first HARQ-ACK information and the second HARQ-ACK information may have the same priority as the priority indicator.

The BS may perform operations according to some implementations of the present disclosure in association with reception of HARQ-ACK information. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

In the BS, the processing device, the computer-readable (non-volatile storage medium, and/or the computer program product, the operations include: determining to defer a reception of first HARQ-ACK information for a first SPS PDSCH reception from a first slot in which the reception of the first HARQ-ACK information is scheduled to a second slot, based on the reception of the first HARQ-ACK information overlapping with a downlink symbol in the first slot; transmitting second DCI triggering a retransmission of a first HARQ-ACK codebook including the first HARQ-ACK information and second HARQ-ACK information in a second slot in which a reception of the second HARQ-ACK information for a PDSCH transmission is scheduled based on first DCI; and receiving a second HARQ-ACK codebook in a third slot later than the second slot, based on the second DCI. The second HARQ-ACK codebook includes the first HARQ-ACK information without including the first HARQ-ACK information.

In some implementations, the first HARQ-ACK codebook may include third HARQ-ACK information for a second SPS PDSCH, scheduled to be received in the second slot. The operations may include deferring a reception of the third HARQ-ACK information to a fourth slot later than the second slot, based on a reception of the first HARQ-ACK codebook overlapping with a downlink symbol in the second slot. The third HARQ-ACK information may not be included in the second HARQ-ACK codebook, based on the deferral of the reception of the third HARQ-ACK information from the second slot to the fourth slot.

In some implementations, the first DCI may include information regarding the first slot.

In some implementations, the information regarding the first slot may be a slot offset indicating a difference between the first slot and a slot in which the first DCI is received.

In some implementations, the first DCI may include a priority indicator. The first HARQ-ACK information and the second HARQ-ACK information may have the same priority as the priority indicator.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### Industrial Applicability

The implementations of the present disclosure may be used in a BS, a UE, or other equipment in a wireless communication system.

## Claims

1. A method of transmitting hybrid automatic repeat request-acknowledgment (HARQ-ACK) information by a user equipment (UE) in a wireless communication system, the method comprising:
deferring a transmission of first HARQ-ACK information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot;
determining a first HARQ-ACK codebook including the first HARQ-ACK information and second HARQ-ACK information in the second slot in which a transmission of the second HARQ-ACK information for a PDSCH reception is scheduled based on first downlink control information (DCI);
receiving second DCI triggering a retransmission of the first HARQ-ACK codebook; and
transmitting a second HARQ-ACK codebook in a third slot later than the second slot, based on the second DCI,
wherein the second HARQ-ACK codebook includes the first HARQ-ACK information without the first HARQ-ACK information.

2. The method of claim 1, wherein the first HARQ-ACK codebook includes third HARQ-ACK information for a second SPS PDSCH, scheduled to be transmitted in the second slot, and the method comprises:
deferring a transmission of the third HARQ-ACK information to a fourth slot later than the second slot, based on a transmission of the first HARQ-ACK codebook overlapping with a downlink symbol in the second slot, and
wherein the third HARQ-ACK information is not included in the second HARQ-ACK codebook, based on the deferral of the transmission of the third HARQ-ACK information from the second slot to the fourth slot.

3. The method of claim 1, wherein the first DCI includes information regarding the first slot.

4. The method of claim 3, wherein the information regarding the first slot is a slot offset indicating a difference between the first slot and a slot in which the first DCI is received.

5. The method of claim 1, wherein the first DCI includes a priority indicator, and wherein the first HARQ-ACK information and the second HARQ-ACK information have the same priority as the priority indicator.

6. A user equipment (UE) for transmitting hybrid automatic repeat request-acknowledgment (HARQ-ACK) information in a wireless communication system, the UE comprising:
at least one transceiver;
at least one processor; and
at least one computer memory operably connectable to the at least one processor and storing instructions that, when executed, cause the at least one processor to perform operations comprising:
deferring a transmission of first HARQ-ACK information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot;
determining a first HARQ-ACK codebook including the first HARQ-ACK information and second HARQ-ACK information in a second slot in which a transmission of the second HARQ-ACK information for a PDSCH reception is scheduled based on first downlink control information (DCI);
receiving second DCI triggering a retransmission of the first HARQ-ACK codebook; and
transmitting a second HARQ-ACK codebook in a third slot later than the second slot, based on the second DCI, and
wherein the second HARQ-ACK codebook includes the first HARQ-ACK information without including the first HARQ-ACK information.

7. A processing device in a wireless communication system, comprising:
at least one processor; and
at least one computer memory operably connectable to the at least one processor and storing instructions that, when executed, cause the at least one processor to perform operations comprising:
deferring a transmission of first hybrid automatic repeat request-acknowledgment (HARQ-ACK) information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot;
determining a first HARQ-ACK codebook including the first HARQ-ACK information and second HARQ-ACK information in a second slot in which a transmission of the second HARQ-ACK information for a PDSCH reception is scheduled based on first downlink control information (DCI);
receiving second DCI triggering a retransmission of the first HARQ-ACK codebook; and
transmitting a second HARQ-ACK codebook in a third slot later than the second slot, based on the second DCI, and
wherein the second HARQ-ACK codebook includes the first HARQ-ACK information without including the first HARQ-ACK information.

8. A computer-readable storage medium storing at least one program code including instructions that, when executed, cause at least one processor to perform operations comprising:
deferring a transmission of first hybrid automatic repeat request-acknowledgment (HARQ-ACK) information for a first semi-persistent scheduling (SPS) physical downlink shared channel (PDSCH) reception from a first slot in which the transmission of the first HARQ-ACK information is scheduled to a second slot, based on the transmission of the first HARQ-ACK information overlapping with a downlink symbol in the first slot;
determining a first HARQ-ACK codebook including the first HARQ-ACK information and second HARQ-ACK information in a second slot in which a transmission of the second HARQ-ACK information for a PDSCH reception is scheduled based on first downlink control information (DCI);
receiving second DCI triggering a retransmission of the first HARQ-ACK codebook; and
transmitting a second HARQ-ACK codebook in a third slot later than the second slot, based on the second DCI, and
wherein the second HARQ-ACK codebook includes the first HARQ-ACK information without including the first HARQ-ACK information.

9. A method of receiving hybrid automatic repeat request-acknowledgment (HARQ-ACK) information by a base station (BS) in a wireless communication system, the method comprising:
determining to defer a reception of first HARQ-ACK information for a first semi-persistent scheduling (SPS) physical downlink shared channel (PDSCH) reception from a first slot in which the reception of the first HARQ-ACK information is scheduled to a second slot, based on the reception of the first HARQ-ACK information overlapping with a downlink symbol in the first slot;
transmitting second downlink control information (DCI) triggering a retransmission of a first HARQ-ACK codebook including the first HARQ-ACK information and second HARQ-ACK information in a second slot in which a reception of the second HARQ-ACK information for a PDSCH transmission is scheduled based on first DCI; and
receiving a second HARQ-ACK codebook in a third slot later than the second slot, based on the second DCI,
wherein the second HARQ-ACK codebook includes the first HARQ-ACK information without including the first HARQ-ACK information.

10. The method of claim 9, wherein the first HARQ-ACK codebook includes third HARQ-ACK information for a second SPS PDSCH, scheduled to be received in the second slot,
wherein the method comprises deferring a reception of the third HARQ-ACK information to a fourth slot later than the second slot, based on a reception of the first HARQ-ACK codebook overlapping with a downlink symbol in the second slot, and
wherein the third HARQ-ACK information is not included in the second HARQ-ACK codebook, based on the deferral of the reception of the third HARQ-ACK information from the second slot to the fourth slot.

11. The method of claim 9, wherein the first DCI includes information regarding the first slot.

12. The method of claim 11, wherein the information regarding the first slot is a slot offset indicating a difference between the first slot and a slot in which the first DCI is received.

13. The method of claim 9, wherein the first DCI includes a priority indicator, and wherein the first HARQ-ACK information and the second HARQ-ACK information have the same priority as the priority indicator.

14. A base station (BS) for receiving hybrid automatic repeat request-acknowledgment (HARQ-ACK) information in a wireless communication system, the BS comprising:
at least one transceiver;
at least one processor; and
at least one computer memory operably connectable to the at least one processor and storing instructions that, when executed, cause the at least one processor to perform operations,
wherein the operations include:
determining to defer a reception of first HARQ-ACK information for a first semi-persistent scheduling (SPS) physical downlink shared channel (PDSCH) reception from a first slot in which the reception of the first HARQ-ACK information is scheduled to a second slot, based on the reception of the first HARQ-ACK information overlapping with a downlink symbol in the first slot;
transmitting second downlink control information (DCI) triggering a retransmission of a first HARQ-ACK codebook including the first HARQ-ACK information and second HARQ-ACK information in a second slot in which a reception of the second HARQ-ACK information for a PDSCH transmission is scheduled based on first DCI; and
receiving a second HARQ-ACK codebook in a third slot later than the second slot, based on the second DCI, and
wherein the second HARQ-ACK codebook includes the first HARQ-ACK information without including the first HARQ-ACK information.
